(19)

**Europäisches Patentamt**

**European Patent Office**

**Office européen des brevets**

(11) **EP 4 779 531 A1**

(12) **EUROPEAN PATENT APPLICATION**

(43) Date of publication:
**22.07.2026 Bulletin 2026/30**

(21) Application number: **25152677.8**

(22) Date of filing: **17.01.2025**

(51) International Patent Classification (IPC):
**G06N 10/60** *(2022.01)*

(52) Cooperative Patent Classification (CPC):
**G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
 • **Universität Innsbruck**
  **6020 Innsbruck (AT)**
 • **Universita Degli Studi di Trieste**
  **34127 Trieste (IT)**

 • **Österreichische Akademie der Wissenschaften**
  **1010 Wien (AT)**

(72) Inventors:
 • **Pichler, Hannes**
  **6020 Innsbruck (AT)**
 • **Cesa, Francesco**
  **35126 Trieste (IT)**

(74) Representative: **Schwarz & Partner Patentanwälte GmbH**
  **Patentanwälte**
  **Wipplingerstraße 30**
  **1010 Wien (AT)**

(54) **QUANTUM RAM**

(57) This application concerns a method of quantum-accessing a memory (2) using a quantum address (3) by operating a quantum computing module (1') and a quantum processing unit (4), wherein the quantum computing module (1') comprises a plurality of resource qubits initialized in a resource state (1), wherein the quantum processing unit (4) supports a quantum address (3) comprising a plurality of address qubits, wherein the method comprises the steps:

i. entangling a first subset of the resource qubits of the resource state (1) with the quantum address (3) by applying a single layer of entangling quantum gates (5) onto the first subset of the resource qubits and the address qubits, subsequently performing a single layer of measurements (6) on the entangled first subset of resource qubits and address qubits and collecting the measurement outcomes (m),

ii. correlating a second subset of resource qubits of the resource state (1) with the memory (2) by applying a single layer of conditional quantum gates (7) depending on the measurement outcomes (m) from step i. and on the values stored in the memory (2) onto the second subset of resource qubits and subsequently performing a single layer of measurements (6) on the correlated second subset of resource qubits,

iii. performing a logarithmic number of layers of measurements (6) on a third subset of the resource qubits of the resource state (1),

iv. collecting the output state (8) on the unmeasured qubits of the resource state (1).

Fig. 1b

EP 4 779 531 A1

**Description**

The present invention relates to a method of quantum-accessing a memory using a quantum address by operating a quantum computing module and a quantum processing unit, and to a quantum random access memory (qRAM) system.

Background of the invention

Quantum computation (QC) promises significant algorithmic speedups for specific tasks, fueling innovation across various modern technologies. Remarkable progress has been achieved in developing quantum processing units (QPUs), witnessed by increasing system sizes, improved performances, and the incorporation of quantum error-correction (QEC). However, critical challenges remain: among these, the development of a quantum Random Access Memory (qRAM), enabling fast quantum mechanical interfaces between the QPU and arbitrary datasets. At its core, a quantum query to a database is modeled as

$$
U_{\mathrm{qRAM}} \left[ \sum_{x} \psi_{x} \, |x\rangle \right] = \sum_{x} \psi_{x} \, |x\rangle \otimes |D_{x}\rangle \, ,
$$

where x and $\psi_x$ label the computational basis of the QPU register and the corresponding amplitudes; $D_x$ is a data-bit stored at memory location x. Minimal modifications extend this to quantum memories. Central to many foundational algorithms, qRAM queries are ubiquitously present in the QC landscape, implementing e.g. 'blackboxes' in oracular paradigms and quantum search, and providing fast calls to complex multi-controlled gates; modern applications also include quantum chemistry and machine learning. More generally, a qRAM allows coherent access to pre-calculated lookup-tables, which can drastically reduce the computational runtime, as retrieving complex (classical or quantum) data is considerably simpler than computing them online. So far, the realization of this primitive is hindered by both theoretical and practical challenges, preventing the demonstration of many pioneering algorithms. For being usable advantageously, a qRAM must be fast and errorcorrectable. Current approaches however necessitate to apply exponentially many non-Clifford gates during the query; these operations, which include e.g. controlled-controlled-not (Toffoli) gates, are particularly hard to error-correct, requiring prohibitive space-time resources. Moreover, existing proposals are challenging to implement with available features of state-of-the-art devices, as they rely on components which are still undeveloped at large-scale. Altogether, these long-standing unsolved points not only hinder technological progress and raise debates on the feasibility of qRAMs, but also pin bold question marks on the potential of QC.

Short description of the invention

The object of the present invention is a quantum random access memory design, which is readily integrable in present large-scale quantum processors, allows for fast and robust quantum queries, and can be naturally combined with quantum error correction.

A solution to the above mentioned problem is provided by a method of quantum-accessing a memory using a quantum address by operating a quantum computing module and a quantum processing unit, wherein the quantum computing module comprises a plurality of resource qubits initialized in a resource state, wherein the quantum processing unit supports a quantum address comprising a plurality of address qubits, wherein the method comprises the steps:

    i. entangling a first subset of the resource qubits of the resource state with the quantum address by applying a single layer of entangling quantum gates onto the first subset of the resource qubits and the address qubits, subsequently performing a single layer of measurements on the entangled first subset of resource qubits and address qubits and collecting the measurement outcomes,
    ii. correlating a second subset of resource qubits of the resource state with the memory by applying a single layer of Pauli conditional quantum gates depending on the measurement outcomes from step i. and on the values stored in the memory onto the second subset of resource qubits and subsequently performing a single layer of measurements on the correlated second subset of resource qubits,
    iii. performing a logarithmic number of layers of measurements on a third subset of the resource qubits of the resource state and
    iv. collecting the output state on the unmeasured qubits of the resource state.

Another aspect of the invention concerns a quantum random access memory (qRAM) system comprising

- a memory,
- a quantum computing module comprising a plurality of resource qubits initialized in a resource state,
- a quantum processing unit supporting a quantum address comprising a plurality of address qubits,

wherein the quantum processing unit is configured to apply entangling gates and measurements onto the resource qubits and the address qubits,
wherein the quantum processing unit is configured to correlate the memory with the resource qubits of the resource state by applying conditional gates onto the resource qubits,
wherein the qRAM system is configured to output an output state corresponding to the state of the quantum address coherently entangled with the memory.

Quantum devices might process data faster than classical computers. To leverage this potential, many algorithms require the aid of a quantum Random Access Memory (qRAM), i.e. a module capable to effciently load datasets (both classical and quantum) onto the processor according to arbitrary 'quantum queries'. A realisation of this fundamental building block was outstanding, since existing proposals required prohibitive resources for reliable implementations, or are not compatible with current architectures. Moreover, these approaches cannot be scaled-up, as they do not allow for effcient quantum error-correction.

In contrast to that, the inventive qRAM design enables fast and robust qRAM calls, naturally allows for fault-tolerant and error-corrected operation, and can be readily integrated on present hardware. The inventive method and system employ a quantum resource that is consumed during the query. Thus, the inventive method and system place a long missing, fundamental component of quantum computers within reach of currently developed technologies; this opens the door to algorithms featuring practical quantum advantage, including search or oracular problems, quantum chemistry and machine learning.

In a preferred embodiment the entangling quantum gates comprise Clifford controlled-phase gates. Further, the conditional quantum gates may be Pauli conditional quantum gates. In a further embodiment, all quantum gates, that is the entangling quantum-gates and the conditional quantum gates, are Clifford gates.

Using only Clifford gates provides dramatic simplifications, as in contrast to non-Clifford gates, which can only be executed and error-corrected during a query at a signifanct cost, these gates can be implemented fault-tolerantly via naive transveral gates and allow for efficient and fast answers to queries. Clifford gates are commonly much simpler and less resource-consuming than non-Clifford gates, which require more demanding techniques for their implementation. Further, repeated syndrome extractions and active error corrections may not be necessary for fault-tolerant implementations. Furthermore, by using only Clifford gates, faults only need to be corrected once the query is over.

Further, all measurements of resource and address qubits may be single-qubit Pauli measurements.

Preferably, the first subset of the resource qubits of the resource state is entangled with the quantum address via a unit depth Clifford circuit. This can be done via pairwise controlled-phase gates.

Depending on the target task, that is the algorithm to be executed by a quantum processor, the memory may be a classical memory comprising a plurality of bits or a quantum memory comprising a plurality of qubits.

In another embodiment the initialization of the resource state comprises applying non-Clifford gates onto the plurality of resource qubits, wherein the number of non-Clifford gates is of order N, wherein N is the number of bits or qubits of the memory. The resource state has no connnection with any detail of an algorithm that shall be executed nor the memory. Thus, the resource state can be seen as a resource furnished by the processor and its preparation thus not influence the execution the the main algorithm. When the resource state is initizalized it may be stored statically and is not manipulated until a query begings. Further, the inventive method and system can tolerated several errors in the resource state, thus, syndrome extraction can be performed at low rates. In addition, for any Clifford query detected errors can be corrected at the end of the query by calculating the progagation of these errors.

According to a certain embodiment the resource state comprises order N resource qubits and can be initialized in the quantum computing module via the following steps:

- preparing order log N Bell pairs via entangling gates,
- implementing a nested one-hot encoding on one half of the Bell pairs via applying order N non-Clifford gates on some resource qubits,
- applying Clifford gates on order N of the resource qubits in the nested one-hot encoding and the remaining resource qubits not acted on yet.

In this embodiment the quantum computing module is configured to initialize the resource state via the above described steps.

Further, the quantum computing module and the quantum processing unit may comprise neutral atom arrays. Note, that the inventive model and system can be implemented in any quantum computing platform. For neutral-atoms the physical qubits may be encoded in long-lived electronic or nuclear levels of single atoms in optical traps. Via laser controls entangling gates can be implemented by exciting the atoms to Rydberg states.

According to another embodiment the resource state comprises order N resource qubits, wherein N is the number of bits or qubits stored by the memory.

Further, the quantum computing module may be configured to initialize the resource state via a quantum circuit comprising order log(N) steps, wherein N is the number of bits or qubits of the memory.

Detailed description and preferred embodiments

The foregoing and other objects, features and advantages of the invention will become more apparent from the following detailed description, which proceeds with reference to the accompanying figures.

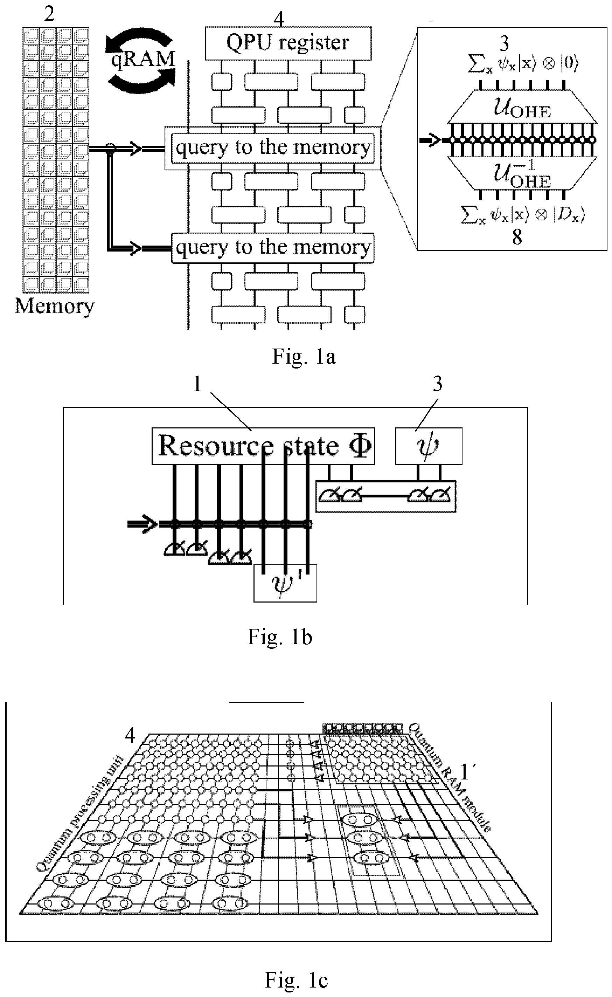

Fig. 1a shows a schematic representation of the tasks of a quantum ram (qRAM); Fig. 1b sketches the inventive implementation of a qRAM with a resource state and Fig. 1c shows an exemplary implementation on a reconfigurable neutral atom processor.

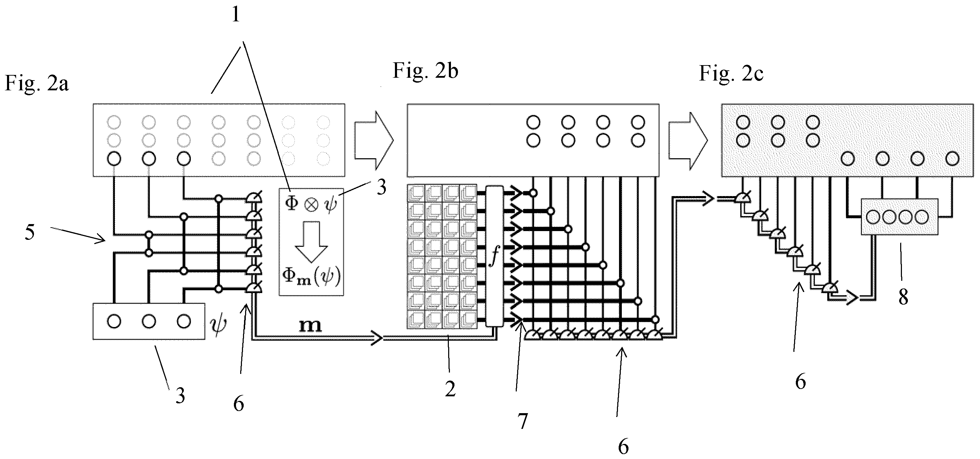

Fig. 2a - 2c show a qRAM protocol with details of the query procedure, where in the first step a subset of the qRAM reservoir is entangled with the QPU register via pairwise controlled-phase gates and the involved qubits are then measured in the X basis, with outcomes collected by m (Fig. 2a) and in the second step another subset of the qRAM ancillas is correlated with the memory via conditional Clifford gates (Fig. 2b) and in the last step almost all the ancillary qubits are measured in adaptive Pauli bases (Fig. 2c).

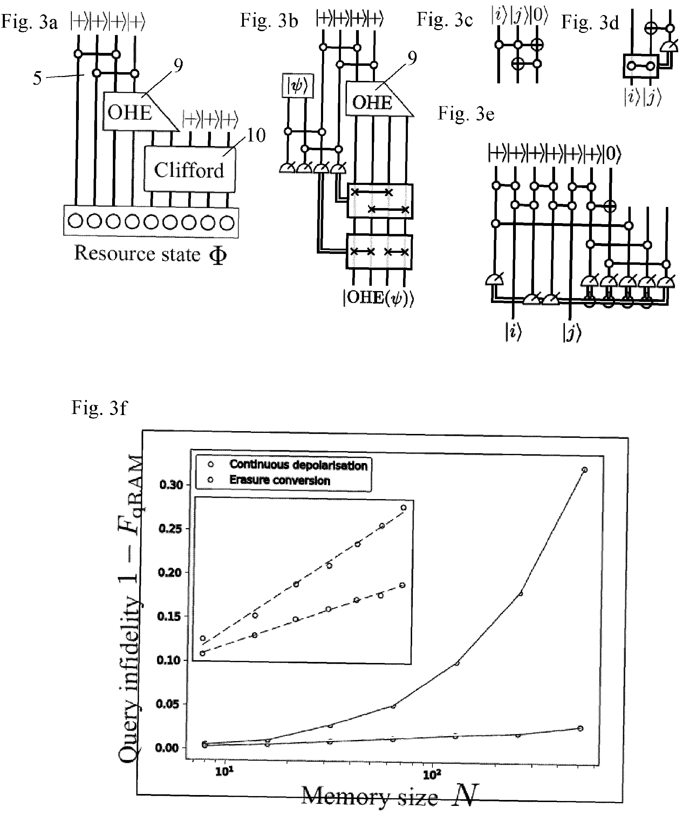

Fig. 3a shows a formal circuit defining the resource state; Fig. 3b shows the resource-state implementation of a one hot encoding; Fig. 3c shows a controlled-swap gate, where one qubit is initially in $|0\rangle$; Fig. 3d shows the inversion of the controlled-not gate of Fig. 3c via a Clifford circuit; Fig. 3e shows a resource-state computation, where the first layer of measurements is in the X basis and the collective outcomes determine the measurement basis of the last two qubits (X or Z); Fig. 3f shows a numerical simulation of the favorable error-scaling of the inventive qRAM.

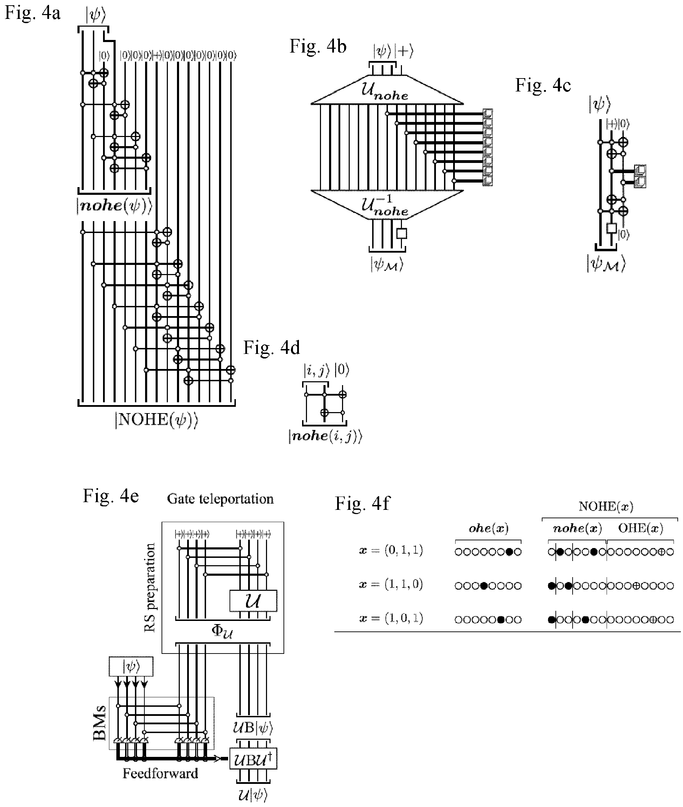

Fig. 4a - 4f show a nested one-hot encoding (NOHE), a quantum RAM and gate teleportation, with a circuit decomposition for realising a NOHE (Fig. 4a); an example of qRAM model based on a NOHE (Fig. 4b); an explicit qRAM model for N = 2, where the address is a single qubit (Fig. 4c); a minimal gadget for the circuit decomposition of $U_{nohe}$ (Fig. 4d); a depiction of standard gate teleportation (GT) for realising an arbitrary gate U (Fig. 4e); and an explicit depiction of the various variations of one-hot encoding, on the example of N = 8 (Fig. 4f).

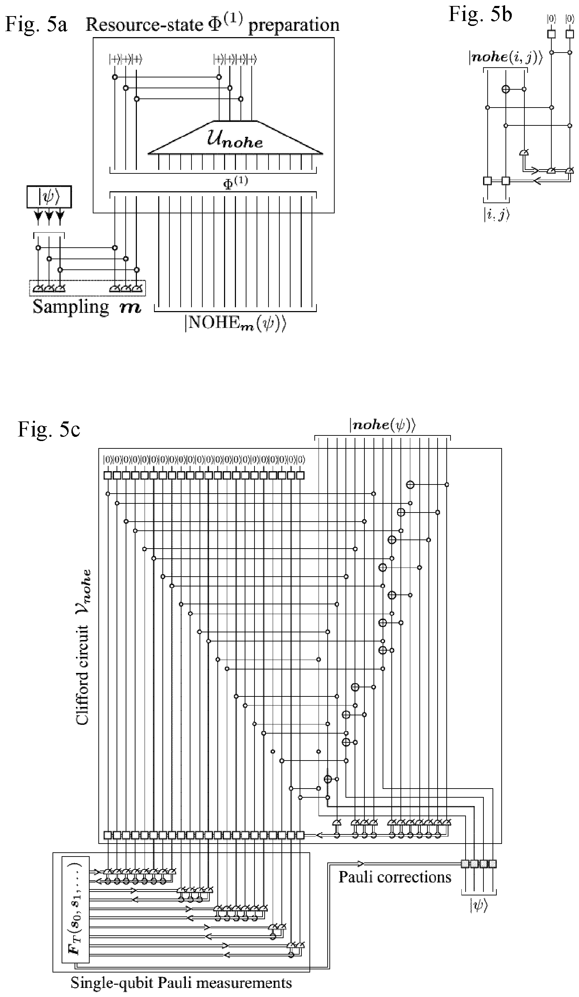

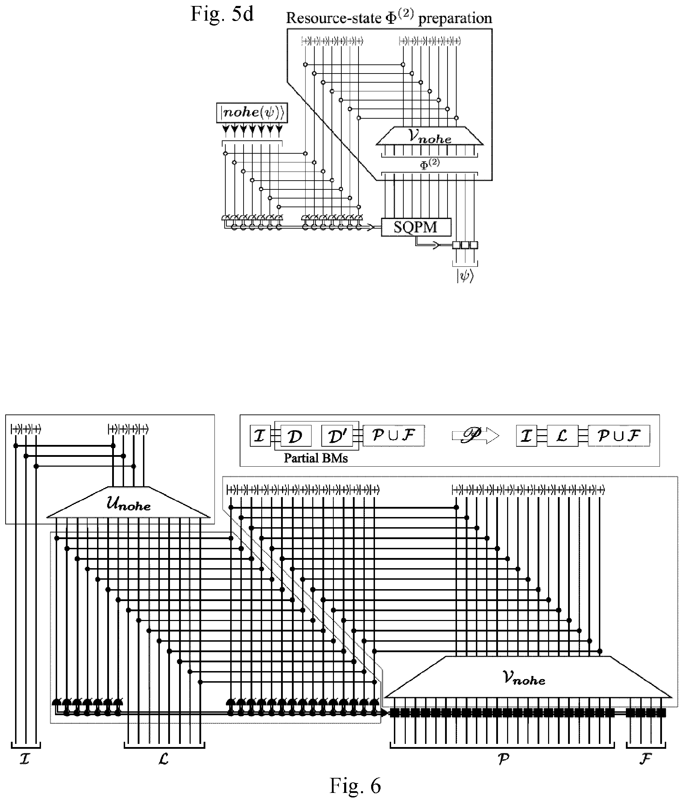

Fig. 5a - 5d show a NOHE sampling and Clifford inversion, with a resource-state sampling of a random $NOHE_m \in \varepsilon$ (Fig. 5a); the invertion of the basic, non-Clifford operation $|i, j\rangle \rightarrow |nohe(i, j)\rangle$ with a Clifford circuit (Fig. 5b); a generic circuit for the Clifford inversion of the NOHE composed by two parts: the first is a circuit $V_{nohe}$ featuring deterministic operations, the second part is a sequence of adaptive Pauli measurements, where each qubit is measured either in the X or in the Z basis according to a decision function $F_T$, which is continuously updated by the measurements (Fig. 5c); and a resource-state protocol for inverting $U_{nohe}$ (Fig. 5d).

Fig. 6 shows a circuit for the resource-state which defines it formally, where in the topleft and right panels in Fig. 6 the preparation of $\Phi^{(1)}$ and $\Phi^{(2)}$, respectively, is highlighted; in the bottom-left panel of Fig. 6 a 'partial' Bell measurement, where not all the qubits are projected, is shown;

and in the scheme on top of Fig. 6 the action of the contraction P is shown; horizontal lines informally represent the presence of entanglement between sets of qubits.

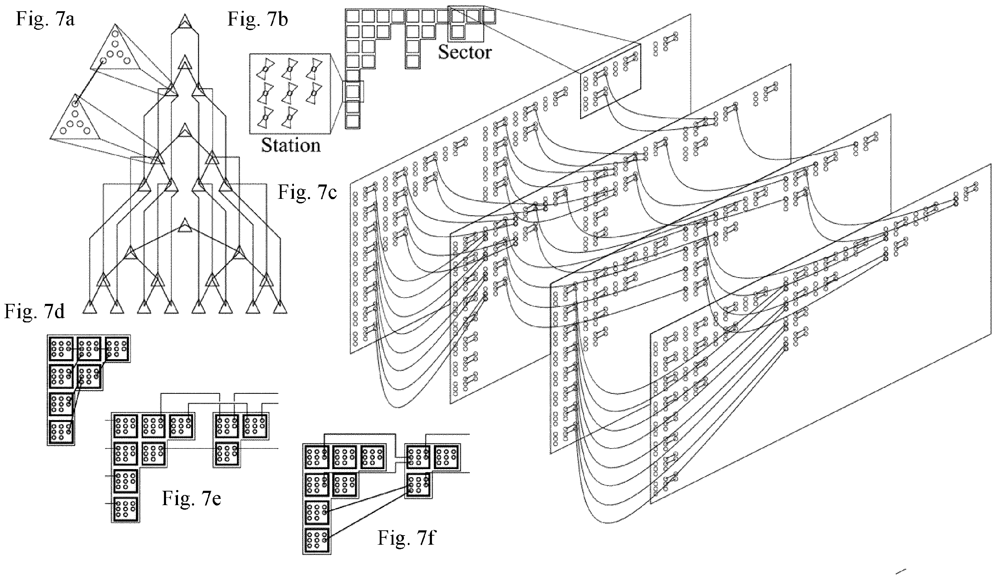

Fig. 7a - 7f shows a rearrangement subroutine, with the Bell-pair distribution described as a nested one-hot encoding bifurcation graph (Fig. 7a); the grouping of SLM traps employed for describing the rearrangement protocol (Fig. 7b); a depiction of the rearrangement (Fig. 7c) and details of the rearrangement (Fig. 7d - 7f).

Reference will now be made in detail to the various exemplary embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

Within the following description of the drawings, the same reference numbers refer to the same components. Generally, only the differences with respect to the individual embodiments are described. The structures shown in the drawings are not necessarily depicted true to scale and may contain details drawn in an exaggerated way to allow for a better understanding of the embodiments.

A number of quantum algorithms require access to a quantum random access memory, a "qRAM," which is a memory 2 that can be accessed by a superposition of memory elements. A classical random access memory ("RAM") is a device that can query a database. Given an address as an input, the RAM can output an element (e.g., a bit value) stored at that address in the database. Analogously, a qRAM is a device that can query a database when given a superposition of addresses 3, and returns a correlated superposition of data from those addresses 3.

Furthermore, while the below description focuses primarily on accessing bits from a classical memory 2, this is purely for purposes of explanation and it will be appreciated that the below techniques may also be applied to access qubits from a memory 2.

## Notation and background:

The single-qubit Hilbert $H^{(1)}$ space is spanned by the 'computational-basis' states $\{|0\rangle, |1\rangle\}$; note, however, that any other basis states can be used by simple single-qubits basis transformations. In general we denote the Hilbert space of n qubits by $H(n) = H^{(1)\otimes n}$. We define the single-qubit Pauli algebra as $X = |0\rangle\langle 1| + |1\rangle\langle 0|$, $Z = |0\rangle\langle 0| - |1\rangle\langle 1|$ and $Y = iXZ$. The eigenstates of X are $|\pm\rangle = (|0\rangle \pm |1\rangle)/\sqrt{2}$; the change of basis with respected to the computational basis is provided by the Hadamard gate $H = (X + Z)/\sqrt{2}$. The Pauli group $C_0$ is generated by tensor products of Pauli operators; the Clifford hierarchy is defined recursively by stating that $U \in C_K$ if $UC_0 U^\dagger \in C_{K-1}$. With our convention, $C_1$ is the Clifford group; any $U \in C_{K \geq 2}$ is said to be non-Clifford. Two important gates belonging to $C_2$ are the 'T gate', defined as $T = e^{-i\pi Z/8}$, the controlled-controlled-Z, defined as $CCZ = 1 - 2|1, 1, 1\rangle\langle 1, 1, 1|$ and the 'Toffoli gate', or controlled-controlled-not, given by $CCX_{1,2,3} = H_3 CCZ_{1,2,3} H_3$.

We denote the QPU register 4 by the set R, and the memory 2 by the symbol M. The latter is composed by N memory locations, which for simplicity we assume to be a power of 2; these locations can be indexed by a binary vector $x = (x_0, \ldots, x_{\log N} - 1) \in \{0, 1\}^{\log N}$, where the logarithm is in basis 2. The memory is thus capable of storing a dataset $D = \{D_x$ for $x \in \{0,1\}^{\log N}\}$, such that we physically store $D_x$ at memory location x; for simplicity, we consider single data-bits, i.e. $D_x \in \{0, 1\}$. Note, however, that this can be generalised to quantum memories 2. Correspondingly, the QPU register 4 has size $|R| = \log N$, and its Hilbert space $H^{(|R|)}$ is spanned by a computational basis in the form $\{|x\rangle$ for $x \in \{0, 1\}^{\log N}\}$.

A quantum address 3 is a generic state on R, $|\psi\rangle = \Sigma_x \psi_z |x\rangle$. Preferably, the quantum addess 3 is initialized in a superposition state. Formally, the task of qRAM can be written as $U_{qRAM} |\psi\rangle \otimes |0\rangle = |\psi_{\mathcal{M}}\rangle$, where we set $|\psi_{\mathcal{M}}\rangle = L \psi_x |x\rangle \otimes |D_x\rangle$.

We start by highlighting the features of fast and noise-resilient qRAM protocols in a unified framework. We consider memories 2 of size N, and QPU registers 4 featuring log N qubits. The basic building-block is a 'one-hot encoding' (OHE) of the quantum address 3 $\psi$: this also involves an additional bus qubit prepared in $|+\rangle = 1/\sqrt{2} (|0\rangle+|1\rangle)$, and is defined by

$$\mathcal{U}_{nohe} \quad : \quad |x\rangle |+\rangle \xrightarrow{\text{one-hot}} |nohe(x)\rangle |\text{OHE}(x)\rangle .$$

Therein, the 'nested' OHE state $|nohe(x)\rangle$ has support on N - 1 qubits and ensures reversibility in a noise-resilient way, as shown in more detail below. $|OHE(x)\rangle$ has support on N qubits, which are all in $|0\rangle$, except a 'pointer-qubit', identified by x, which is in $|+\rangle$. For instance, for N = 8 we have $|OHE(0, 1, 1)) = |0, 0, 0, 0, 0, 0, +, 0\rangle$, with the pointer at the position whose binary representation is x = (0, 1, 1). Classical versions of this are common e.g. for representing categorical variables in machine learning, or for distinguishing words from a vocabulary. In general, a query to the qRAM proceeds in three steps as in Fig. 1a (right-hand side): (i) A OHE is applied according to the above defintion; (ii) The data is loaded via the single-qubit unitaries $\mathcal{W}_D = \otimes_x Z^{D_x}$ to the OHE-qubits - that is, the last N in the above equation; (iii) The OHE is inverted and a final Hadamard $H = (X +Z)/\sqrt{2}$ is applied to the bus, where the data is retrieved.

In summary, the operation is written as $H_{bus} U_{qRAM} = \mathcal{U}_{nohe}^{-1} \mathcal{W}_D \, \mathcal{U}_{nohe}$ .

Following this, the qRAM subroutine can be realized with O(log N) circuit-depth, and benefits of a remarkable polylogN infidelity scaling. The crucial challenge is that this scheme requires O(N) long-range non-Clifford gates, acting on O(N) ancillary qubits. Executing and error-correcting them during a query incurs a significant cost, hindering effcient and fast answers. Moreover, when embedded on locally-connected processors, the infidelity deteriorates to polyN scalings, demanding prohibitive resources for quantum error correction (QEC).

## Main concepts:

The inventive approach overcomes these limitations by generalizing ideas from gate teleportation (GT) to implement steps i. - iv. of the inventve method and system, preferably as an entirely Clifford subroutine. Below we introduce the main underlying concepts; we detail the query protocol in the next section, and then connect to QEC.

The goal of GT is to apply a unitary U to an input state $\psi$ on log N qubits with the help of the resource state (RS)

$$\Phi_{\mathcal{U}} \equiv \left(\mathbb{1} \otimes \mathcal{U}\right) \Psi^{\otimes \log N}$$

, where $\psi$ is a Bell pair. Precisely, using log N Bell measurements (BMs) between the RS and the input, GT outputs UB $|\psi\rangle$, where B is a random Pauli operator determined by the BM result. If U is e.g. a Clifford gate, correcting for B by applying $UBU^\dagger$ is simple, making GT deterministic.

For implementing the OHE, in principle GT faces the challenge that $U_{nohe}$ is deep in the Clifford hierarchy, preventing simple corrections of the byproduct $U_{nohe}BU_{nohe}{}^\dagger$. A key insight underlying the inventive construction is that for the purpose of qRAM, it is not necessary to correct for B, and we can actually employ any operation from the extended family $\varepsilon = \{ \mathcal{U}_{nohe,B} \equiv \mathcal{U}_{nohe} B \text{ for } B \in \mathcal{C}_0 \}$. where $C_0$ is the Pauli group. This is because for every $B = \bigotimes_i Z_i^{a_i} X_i^{b_i}$ , the operation $U_{nohe}B$ implements an alternative OHE: Z components introduce phases, which cancel out automatically during step iii., when the measurements 6 are performed on the resource qubits; X components permute the pointers of different addresses 3, which we efficiently track in classical processing. Specifically, the OHE of x now simply displays the pointer at location f(x) = x ⊕ b. In summary, with the aid of the RS $\Phi^{(1)} \equiv \left(\mathbb{1} \otimes \mathcal{U}_{nohe}\right)\Psi^{\log N}$ , GT implements a generalised version of step i., sampling randomly from $\varepsilon$.

To implement step iii. we develop a measurement-based approach, preferably inverting the OHE via single-qubit Pauli measurements (SQPMs) on a stabiliser RS. For this, we first note that $U_{nohe}$ is an isometry constructed by iterating the basic operation in Fig. 3c. The operation in Fig. 3c corrsponds to a controlled-swap gate, where one qubit is initially in |0 and may be implemented by applying a Toffoli gate (non-Clifford) and a controlled-not gate. Even though this primitive is non-Clifford, it can be inverted with Clifford operations and SQPMs. As we show below, this is possible because we only require inversion on the image of $U_{nohe}$, which is an exponentially smaller subspace. We can therefore find a stabilizer RS $\Phi^{(2)}$ with the following property: after entangling any input state $\Xi$ with $\Phi^{(2)}$ via BMs, a sequence of adaptive SQPMs extracts the desired output $U^{-1}{}_{nohe}|\Xi\rangle$.

Finally, we leverage standard Clifford techniques to 'merge' $\Phi^{(1)}$ and $\Phi^{(2)}$ in a single, compact resource state 1, $\Phi$ (see below for more details), which fuels our query protocol detailed below; an intuition is given in Fig. 3a. There an exemplary formal circuit defining the resource state 1, $\Phi$ is shown. In this examplary initialization of the resource state 1, the first part of the circuit prepares log N Bell pairs via entangling quantum gates 5, and then applies a nested OHE 9 to one half; it acts on 2N - 1 qubits employing O(N) non-Clifford gates. The second part of the circuit is entirely Clifford, involving N of the previous qubits, and the remaining 3N - 2 and applies Clifford gates 10 on them. 1. Note, that the exact numbers are very flexible and depend on different optimizations, and different optimizations might be well suited for specific quantum platforms or future technological advancements. Thus, the number given in this patent application are just examples and shall not limit the scope of protection.

## Query protocol:

We now outline the query procedure, that is the inventive method of quantum-accessing a memory 2 using a quantum address 3 by operating a quantum computing module 1' and a quantum processing unit 4. Prior to it, the resource state 1, $\Phi$ is prepared via an effcient algorithm of depth O(log N) on O(N) resource qubits (see below for more details). For the query, we proceed in four steps i.-iv. as schematically shown in Fig. 2a - 2c. In the first step i. a first subset of the resource qubits of the resource state 1 is entangled with the quantum address 3 by applying a single layer of entangling quantum gates 5 onto the first subset of the resource qubits and the address qubits. Then, a single layer of measurements 6 are performed on the entangled first subset of resource qubits and address qubits and the measurement outcomes m are collected. Preferably, Bell measurements (BMs) are performed as entangling quantum gates 5. Step i. effectively implements a OHE via generalized GT as introduced previously. Specifically, it generates a conditional state $\Phi_m(\psi)$ on the resource qubits, corresponding to a sample from $\varepsilon$ applied to $\psi$.

In the second step ii. a second subset of resource qubits of the resource state 1 is correlated with the memory 2 by applying a single layer of conditional quantum gates 7 depending on the measurement outcomes m from step i. and on the values stored in the memory 2 onto the second subset of resource qubits. Then, a single layer of measurements 6 is performed on the correlated second subset of resource qubits. Thus, each data-bit $D_x$ of the memory 2 is correlated with the corresponding pointer-qubit via conditional quantum gates 7, exemplary via conditional Z gates.

The location of the pointer-qubit depends on the measurement outcomes m via f(x), requiring to adapt the operation $W_D$. This can be absorbed in the next step.

In the third step iii. a logarithmic number of layers of measurements 6 is performed on a third subset of the resource qubits of the resource state 1. That is, the OHE is inverted as outlined above via measurements, preferably adaptive SQPMs, on a third subset of the resource qubits, retrieving the output of the quantum query on the unmeasured qubits.

In the fourth and last step iv. the output state 8 is collected on the unmeasured qubits of the resource state 1 and may be used for any quantum algorithm to be executed. Overall, the query may be executed in O(log N) Clifford depth, including log N BMs and O(N) SQPMs. Most importantly, it can be entirely Clifford.

### Quantum error-correction:

Applying QEC has long been considered crucially problematic for qRAMs; we already mentioned the following reasons. First, involving O(N) ancillas suggests that errors scale exponentially in the QPU size; Second, previous proposals needed O(N) non-Clifford gates during the query. These features would demand unfeasible efforts not only for near-term implementations, but also for error-corrected, fault-tolerant (FT) processors.

Regarding the first point, it was recently proven that $O(\log^\alpha N)$ error-rates are possible for protocols featuring highly-constrained error-propagation. In this work, this is obtained via the nested OHE discussed below. We certify this by simulating the protocol numerically and calculating the query fidelity $F_{qRAM}$; the results are displayed in Fig. 3f. We consider an always-on depolarising channel (upper line in Fig. 3f), as well as a more realistic model for neutral-atoms, where errors are dominated by faulty gates and erasure-conversion of leakages is applied (lower line in Fig. 3f). Assuming $1 - F_{qRAM} \sim \log^\alpha N$, we extract the dominating exponents as $\alpha \simeq 3.8$ and $\alpha \simeq 1.9$ respectively - in line with the theoretical expectations. Here, $F_{qRAM} = (\psi'|TrA\ pout\ |\psi')$ is the fidelity of the desired output $\psi'$ with the obtained one, $\rho_{out}$, after tracing out the qRAM ancillas.

Concerning the second point, our results provide dramatic simplifications, making FT qRAMs feasible on currently-pursued processors. The key is that all operation in the inventive method can be Clifford, and can be implemented fault-tolerantly via naive transversal operations. Moreover, an important feature of our design is that for implementing our query fault tolerantly, repeated syndrome extraction and active error correction are not necessary: On the one hand, GT allows for built-in syndrome-extraction of the Knill-type after step (i); On the other hand, the subsequent SQPMs, being destructive, provide themselves all the needed syndrome snapshots; Finally, since these are Clifford manipulations, faults only need to be corrected once the query is over. The most demanding aspect is preparing Φ; but since it is independent, it allows ad-hoc optimisations and post-selected protocols, potentially including dedicated distillation procedures. Any associated complexity does not impact the query. One approach is to pre-assemble as many copies of Φ as needed. Alternatively, we can parallelise a query with the preparation of a new copy of Φ for the next query, resulting in an effcient cycle, that does not add any time-depth.

### Physical implementation:

The inventive qRAM module can be integrated in any QC platform; here we discuss exemplary neutral-atoms. Physical qubits are encoded in long-lived electronic or nuclear levels of single atoms in optical traps; laser control enables e.g. entangling gates via excitation to Rydberg states, and demonstrated techniques allow for high-fidelity midcircuit readout. Moreover, atoms can be dynamically rearranged with optical tweezers, resulting in a processor whose layout is reconfigurable. We envision to prepare and store the resource state 1, Φ in a 'qRAM zone' 1'. We harness atom-transport for preparing the resource state Φ in O(log N) runtime, and with only O(1) rearrangements (see also below). Crucially, this achieves the non-local connectivity needed for assembling the resource state 1, Φ with the claimed built-in noise-resilience. The long coherence times allow to store the resource state 1, Φ with low-rate QEC. For the query, we extract log N qubits and entangle them with the QPU register 4. Recent QEC experiments have demonstrated transversal gates by shuttling logical blocks across the processor, which unlocks one key point of our design: an error-corrected query simply parallelises the operations we would apply to physical qubits, to logical blocks.

To estimate the near term potential, we note that with depolarization rate of $10^{-4}$, one can realize query memories of size $N \simeq 1024$ with fidelity above 50% without QEC; moreover, we find tremendous improvements with leakage-conversion to Z-biased errors, with fidelities above 90% for memory sizes up to $N \simeq 10^5$.

### Nested one-hot encoding:

In the following a more detailed definition of one key concept in this work is given, borrowed by classical computer science and machine learning, that is known as 'one-hot encoding' (OHE); this allows us to develop a unified framework, capturing the principal aspects of existing proposals for realising a fast quantum RAM. Further, we introduce the notion of nested one-hot encoding (NOHE), which enables intrinsic error-resilience - a fundamental requirement for a qRAM, both for near-term implementations and for quantum error-corrected modules. A OHE is a representation of a finite set $\{w_0, ...,$

$w_{N-1}$} of size N via N bits; specifically, $w_k$ is represented by an N-bit string ohe($w_k$) with components $ohe_j(w_k) = \delta j,k$. That is, element $\omega_k$ is identified by the k-th bit in the encoding string being 'hot'. In our case, the set M consists of the memory locations where data-bits are stored, and can be indexed by $\mathcal{M} \cong \{0, 1\}^{\log N}$, the set of all 'computational basis' labels x =

$(x_0, ..., x_{\log N-1})$. Thus, $ohe_j(x) = \delta j, \mu(x)$, where $\mu(x) = \sum_{K=0}^{\log N - 1} x_K 2^K$ is the number whose binary representation is given by x.

In summary, the OHE can be understood as an injection from a space of log N to N bits.

We further introduce the nested one-hot encoding (NOHE) as a string of OHEs, where x is represented by progressively encoding its sub-strings; more precisely, $nohe(x) = ohe^{(0)}(x), ..., ohe^{(\log N-1)}(x)$, where $ohe^{(K)}(x)$ is a standard OHE of the first K bits of x, but the 'hot' bit $\mu_K(x)$ is set to $x_K \in \{0, 1\}$ instead of 1. Precisely, this is defined as $ohe^{(K)}(x) = x_K$ ohe $(x_0, x_1, ..., x_{K-1})$, with the common conventions for the product of a vector by a scalar. We can generalise this to the quantum domain by linearity: for any log N qubit state $|\psi\rangle = \Sigma_x \psi_x |x\rangle$ we set $|nohe(\psi)\rangle \equiv \Sigma_x \psi_x |nohe(x)\rangle$.

We will refer to the NOHE operation via a map $U^{(N)}_{nohe}$, defined (informally) such that $U^{(N)}_{nohe} |\psi\rangle = |nohe(\psi)\rangle$ for an arbitrary state $\psi$. The superscript N indicates that this is an isometry from log N to N - 1 qubits; we will omit the superscript when the space of action is clear from the context. We discuss $U_{nohe}$ more in detail below, where we also provide a circuit decomposition.

### Bus qubit:

For our qRAM design, we introduce a 'bus qubit'. Specifically, for any address $\psi$ 3 on log N qubits, we introduce an additional qubit in a certain bus state, preferably in the $|+\rangle$ state, and consider the NOHE on the composite state, $|NOHE(\psi)\rangle$ = $U^{(2N)}_{nohe} |\psi\rangle (D |+\rangle$. This is supported on 2N - 1 qubits and has a simple interpretation for computational basis states (i.e., when $|\psi\rangle = |x\rangle$ for some classical index x): the first N - 1 qubits support nohe(x), while the last N qubits support the standard OHE, with the crucial difference that the 'hot' pointer qubit is a 1+) state; this is captured by defining a quantum OHE state $|OHE(x)\rangle \equiv (|0\rangle^{\otimes N} + |ohe(x)\rangle )/\sqrt{2}$. For computational basis states, $|NOHE(\psi)\rangle$ then reads $|NOHE(x)\rangle = |nohe(x)\rangle |OHE(x)\rangle$, or

explicitly $|\text{NOHE}(x)\rangle = \left[ \bigotimes_{\alpha=0}^{N-2} |nohe_\alpha(x)\rangle \right] \left[ \bigotimes_{\alpha=N-1}^{2(N-1)} \text{H}^{\Delta_{\alpha,x}} |0\rangle \right]$ ; therein, we set for simplicity $\Delta_{\alpha,x} = \delta_{\alpha-N+1,\mu(x)}$,

which is just a common Kronecker delta, shifted to the last N qubits.

### Circuit decomposition of NOHE:

We now discuss the operation $U_{nohe}|\Psi\rangle = |nohe(\psi)\rangle$. In this form, it should be understood as an isometry from log N to N - 1 qubits, which can be embedded in a unitary circuit by introducing N -log N -1 ancillary qubits initialised in $|0\rangle$. Importantly, this can be implemented by iterating the application of a simple primitive, as we detail in the following.

To fix the notation, we first define the Friedkin gate (i.e., the controlled-swap) as $CS(a|b, c) = |0\rangle_a \langle 0| \otimes 1_{b,c} + |1\rangle_a \langle 1| \otimes S_{b,c}$, where $S_{b,c}$ implements a swap of the qubits b $\leftrightarrow$ c, i.e. $S_{b,c}|\psi_b\rangle 0 |\phi_c\rangle = |\phi_b\rangle \otimes |\psi_c\rangle$. Moreover, for K < J we define

$\overline{CS}(K|J) = \prod_{\alpha=2^K-1}^{2(2^K-1)} CS(\alpha|\alpha + 2^J - 2^K, \alpha + 2^J)$ ; where we recall that we are considering a string of N-1 qubits labeled

by $\alpha = 0, 1, ..., N - 2$. Moreover, here and everywhere we use the ordering convention that

$\prod_{k=k_{\min}}^{k_{\max}} U_k = U_{k_{\max}} U_{k_{\max}-1} \ldots U_{k_{\min}}$ . Then, the NOHE operation can be decomposed as

$\mathcal{U}^{(N)}_{nohe} = \left[ \prod_{K=0}^{\log N-2} \prod_{J=K+1}^{\log N-1} \overline{CS}(K|J) \right] \left[ \prod_{K=2}^{\log N-1} S_{K,2^K-1} \right]$ ; formally, this implements the desired operation as $U_{nohe}|\psi\rangle |$

$0\rangle^{\otimes N-\log N-1} = |nohe(\psi)\rangle$. Note that the first layer, which only features swaps, is just a qubit relabeling introduced for formal convenience, and does not need to be implemented on hardware. The expression above can be further simplified by realising that the Friedkin gate is always applied with one of the targets in the $|0\rangle$ state; this allows to substitute it with the 'gadget' in Fig. 4d, that is a minimal gadget for the circuit decomposition of $U_{nohe}$, consisting of a Toffoli and a controlled-not gate. Note that this saves one controlled-not per Friedkin gate. Altogether, this results in the circuit decomposition shown in Fig. 4a for the explicit example of N = 8. The standard $|nohe(\psi)\rangle$ is obtained by applying the circuit in the top-left part of Fig. 4a; by adding a bus qubit in the $|+\rangle$ state and iterating the same procedure, we obtain $|NOHE(\psi)\rangle$. Finally, we remark that while the equation above for $U_{nohe}^{(N)}$ apparently suggests a $O(\log^2 N)$ circuit depth, it can be parallelised to exactly $T_f = 2$ logN - 1 layers.

NOHE and quantum RAM:

The concepts introduced so far allow for an elegant unified description of kown qRAM protocols. For this, note that the query operation can be executed via a protocol of the form shown in Fig. 4b: here a NOHE is first applied to $|\psi\rangle$ (D | +), and then inverted after a layer of parallel classically-conditioned gates. The latter gates act on the last N qubits of the NOHE as follows: if $D_x = 1$, a Z-gate is applied to the corresponding pointer qubit - i.e. to qubit $\alpha = N-1+\mu(x)$. This

corresponds to the operation $\mathcal{W}_D = \left[ \bigotimes_{\alpha=0}^{N-2} \mathbb{1}_\alpha \right] \left[ \bigotimes_{\alpha=N-1}^{2(N-1)} Z_\alpha^{D_{\mu-1}(\alpha-N+1)} \right]$ . Finally, we also apply a Hadamard gate to the bus qubit. It can be straightforwardly shown that this procedure indeed implements the qRAM unitary on any input: that is, for

any address $\psi$ 3 on log N qubits we get $\left[ \mathbb{1}^{\otimes \log N} \otimes \mathrm{H} \right] \left[ \mathcal{U}_{nohe}^\dagger \mathcal{W}_D \, \mathcal{U}_{nohe} \right] |\psi\rangle \otimes |+\rangle = |\psi_\mathcal{M}\rangle$ . For the inventive qRAM design, this equality will be of foundational importance.

**Constant-depth NOHE sampling:**

We now discuss the following task: given an arbitrary address state $\psi$ 3, we are interested in applying the NOHE to it, i.e. in executing $\psi \to \mathrm{NOHE}(\psi)$. In principle, this can be achieved by directly implementing $U_{nohe}$ - i.e., via O(N) non-Clifford gates in O(log N) runtime. Here we present a different procedure, that instead employs a RS 1, and only requires to implement a Bell measurement on O(log N) qubits. This has three major advantages: given the RS 1, our method (i) only takes O(1) steps, (ii) only needs Clifford gates 10 and single-qubit Pauli measurements 6 (SQPMs), and (iii) has appealing features from the QEC perspective. We discuss the latter point in detail in a dedicated section below. Our method is based on a GT paradigm. We recall that, given an arbitrary gate U and a suitable ancillary resource-state $\Phi_U$, GT allows to sample a random gate of the form UB, where B E $C_0$ is a random Pauli operator; from the time the input is furnished, this only requires an O(1) depth Bell measurement. More precisely, for any input state $\psi$, upon performing the Bell measurement one obtains the state UB $|\psi\rangle$. If $U \in C_1$ is a Clifford gate, it is straightforward to account for the Pauli byproduct by applying the simple Pauli correction UBU† E $C_0$. However, in general (i.e., for U E $C_K$ with large K) the application of U is based on post-selection (specifically, on sampling B = 1), with an exponentially vanishing success probability (in system-size). In contrast, our protocol is based on the remarkable observation that we can use GT for qRAM, despite $U_{nohe}$ E $C_{\log N}$ being highly non-Clifford. The reason is that for any B, the sampled gate UB implements a variant of the 'standard' NOHE that is equally well suited for the qRAM; eventually, this provides us with a Clifford NOHE protocol of O(1) depth. We elaborate on this in the next sections.

NOHE uniform sampling space:

We start by introducing one crucial concept for our qRAM design. In addition to the NOHE discussed above, we can define a whole family of NOHEs, $\varepsilon = \{\mathrm{NOHE}_m$ for $m \in \{0,1\}^{2\log N}\}$; by setting m = (a, b) and a, b $\in \{0, 1\}^{\log N}$, elements in $\varepsilon$ are defined on the computational basis by $|\mathrm{NOHE}_m(x)\rangle \equiv (-)^{a \cdot x} |\mathrm{NOHE}(x \oplus b)\rangle$, and then extended by linearity to the whole Hilbert space. Therein, we defined the vector binary addition as $(x \oplus b)_K \equiv x_K \oplus b_K$, and the scalar product as a · x = $a_0 x_0 \oplus \cdots \oplus a_{\log N-1} x_{\log N-1}$. Finally, we can define the 'NOHE sampling space' by equipping $\varepsilon$ with a uniform distribution among its components, i.e. associating an equal probability $N^{-2}$ to each $\mathrm{NOHE}_m$.

Importantly, we can express the generalised NOHE in a simple form by noting that $|\mathrm{NORE}_m(\psi)\rangle = U_{nohe}B_m|\psi\rangle$, where we defined the Pauli operator $B_m = X^{\otimes b} Z^{\otimes a} \in C_0$; here in general we set e.g. $x^{\otimes b} = \otimes_k X^{bk}$. Thus, $\mathrm{NOHE}_m(\psi)$ is equivalent to the NOHE of a state obtained by applying a simple Pauli correction to $\psi$, prior to $U_{nohe}$. However, the propagation of $B_m$ through $U_{nohe}$ is highly nontrivial, owing to the deep non-Cliffordness of the latter: in general, $U_{nohe}B_m U_{nohe}^\dagger$ is at a high layer in the Clifford hierarchy, meaning that deeply non-Clifford circuits are necessary for switching from one NOHE to another, involving O(N) non-Clifford operations. Nevertheless, in our qRAM design any NOHE from $\varepsilon$ can be equally employed for executing the query; in other words, our query protocol will take large advantage of sampling from $\varepsilon$, thus realising a probabilistic NOHE, in place of deterministically implementing the standard operation $U_{nohe}$.

Sampling protocol:

The sampling protocol essentially consists of a standard GT, with the exception that we do not apply any adaptive byproduct correction after the Bell measurements; hence, we implement the teleportation of a random gate. An illustration is displayed in Fig. 5a. The first (boxed) part constructs a resource-state $\Phi^{(1)}$; in a nutshell, we first prepare log N Bell pairs,

and then apply $U_{nohe}$ to one partition, resulting in $\left|\Phi^{(1)}\right\rangle = \frac{1}{N}\sum_{y,z}(-)^{y\cdot z}|y\rangle_{\mathcal{I}}\otimes|\mathrm{NOHE}(z)\rangle_{\mathcal{D}}$. Therein, the partitioning of the qubits supporting $\Phi^{(1)}$ in I $\cup$D is defined implicitly; note that the state above is a conventional resource-state for GT. For the sampling, we now introduce the state $\psi$, which is supported on the register qubits R, and we perform Bell measurements between corresponding qubits on R U I. More specifically, we proceed in two steps. First, we apply a layer of pairwise controlled-phase gates between Rand I via

$$\mathrm{CZ}_{\mathcal{R}\cup\mathcal{I}} \equiv \bigotimes_{k=0}^{\log N - 1} \mathrm{CZ}_{k\in\mathcal{R},k\in\mathcal{I}},$$

, where we recall that R and I have both size log N. Second, we measure R $\cup$ I in the X basis, collecting the outcomes m. This generates a conditional state of the form

$$\left|\Phi_{m}^{(1)}(\psi)\right\rangle = \frac{1}{\sqrt{\mathcal{N}_m(\psi)}}\,\mathbb{P}_{\mathcal{R}\cup\mathcal{I}}^{(m)}\,\mathrm{CZ}_{\mathcal{R},\mathcal{I}}\left[|\psi\rangle\otimes\left|\Phi^{(1)}\right\rangle\right],$$

where $\mathbb{P}_{\mathcal{R}\cup\mathcal{I}}^{(m)}$ is the projector onto the measured subspace. More precisely, we set $m_j = 0$ if the measurement outcome on qubit j is $X_j = +1$, and $m_j = 1$ if $X_j = -1$; thus,

$$\mathbb{P}_{\mathcal{R}\cup\mathcal{I}}^{(m)} = \left[\bigotimes_{r\in\mathcal{R}}\frac{\mathbb{1}+(-)^{m_r}X_r}{2}\right]\left[\bigotimes_{i\in\mathcal{I}}\frac{\mathbb{1}+(-)^{m_i}X_i}{2}\right]$$

. Note that we will use this notation for X-basis projectors also in the following paragraphs; moreover, we will always refer to this procedure when mentioning 'Bell measurements'. The measurement outcomes are uniformly distributed, i.e. $N_m(\psi) = N^{-2}$ for any m and $\psi$; hence, the equation for the conditional state defines a linear operation. Specifically, it can be directly verified that we always get $\left|\Phi_m^{(1)}(\psi)\right\rangle = |\mathrm{NOHE}_m(\psi)\rangle$, where on the right-hand side we omitted the trivial (factorised) part supported on RUI; thus, we are to all effects applying a random (known) $\mathrm{NOHE}_m$ to $\psi$, by sampling uniformly from $\varepsilon$ in O(1) time. Connecting to the formalism of the section above, we simply have m = (a, b) with a and b collecting the measurement outcomes on R and I respectively.

**Clifford NOHE inversion:**

We now discuss the following important concept: even though executing the map $\psi\rightarrow\mathrm{NOHE}_m(\psi)$ necessarily involves O(N) non-Clifford gates, this same map can be inverted via a completely Clifford procedure. While apparently contradictory, this statement holds true because $U_{nohe}$ actually implements a large isometry, mapping the Hilbert space of log N qubits in the space of N - 1 qubits; this allows to effectively invert it on its image in the codomain, by leveraging non-reversible destructive procedures (i.e., employing measurements 6).

In the following, we explain this by first showing how the non-Clifford minimal gadget in Fig. 4d can be inverted via Clifford operations; we note that this is equivalent to inverting the NOHE for N = 4. Then, since the NOHE for arbitrary N is decomposed in the iteration of this gadget, it follows naively that it can be inverted by iterating the same inversion procedure; importantly, this iteration can be further optimised in the general case.

Inverting a minimal NOHE:

To illustrate the main idea, we detail explicitly how the Clifford NOHE inversion works on the simple example of N = 4. In this case, the NOHE can be written as the isometry $\mathcal{U}_{nohe}^{(4)} \equiv \sum_{i,j}|i, j\oplus ij, ij\rangle\langle i, j|$; for inverting it, we need to implement the right-inverse $\mathcal{G} \equiv \Sigma_{i,j,k}|i, j\oplus k\rangle\langle i, j, k|$, such that $G\,U_{nohe} = 1$ is the identity on $H^{(2)}$. Due to the manifest non-reversibility of G, it cannot be implemented via unitaries only; however, we now outline a protocol to execute G on the image of $U_{nohe}$ by introducing measurements. To this end, let us first consider a generic three-qubit input state $|x\rangle = \Sigma_{i,j,j}\, \chi_{i,j,k}\, |i, j, k\rangle$.

Our goal is to construct the state $\mathcal{G}\, |\chi\rangle = \Sigma_{i,j,k}\, \chi_{i,j,k}\, |i, j \oplus k\rangle$, under the assumption that $\chi \in U_{nohe}(H^{(2)})$. For this, we proceed as in Fig. 5b: (i) We implement a controlled-not gate between the third and the second qubit; (ii) We entangle the first and second qubit with an ancillary Bell pair via controlled-phase gates; (iii) We measure the third input qubit in the X basis, collecting the outcome $s_0 \in \{0, 1\}$; (iv) We measure the ancillas in a single-qubit Pauli basis, choosing either the Z (if $s_0 = 0$) or the X basis (if $s_0 = 1$), and we collect the outcomes $s_1 = (\alpha, \beta) \in \{0, 1\}^2$; (v) We finally apply single-qubit Pauli gates on the original qubits, depending on $(s_0, si)$. To inspect the protocol further, we start by writing down the conditional state after the X basis measurement in step (iii), which reads $|\chi| s_0\rangle = \sum_{a,b} (-)^{a,b} |a, b\rangle \otimes \sum_{i,j,k} (-)^{ai+b(j+k)+s_0 k} \chi_{i,j\oplus k,k} |i,j\rangle$ ;

here the ancillary qubits are written to the left of the tensor product. For step (iv), we now measure the ancillas depending on the obtained outcome $s_0$. If we measured $s_0 = 0$, we simply measure in the Z basis; the system is then projected to

$|\chi| s_0 = 0, s_1\rangle = Z^\alpha \otimes Z^\beta \sum_{i,j,k} \chi_{i,j,k} |i, j \oplus k\rangle$ . Thus, in step (v) we simply need to apply the Pauli correction $Z^\alpha \otimes Z^\beta$

to cancel the byproduct and retrieve our target output $G|\chi\rangle$. Differently, if $s_0 = 1$ we measure in the X basis; now the

conditional state reads $|\chi| s_0 = 1, s_1\rangle = Z^\beta \otimes Z^\alpha \sum_{i,j,k} (-)^{i(j+k)+k} \chi_{i,j,k} |i, j + k\rangle$ , which for general $\chi$ is not trivially

connected to the target output. However, we recall now the assumption that $\chi$ belongs to $U_{nohe}(H^{(2)})$. This subspace can be characterised by the projector $\mathbb{P} = \sum_{i,j,k} \delta_{ij,0}\delta_{k,ik} |i, j, k\rangle \langle i, j, k|$ . Crucially, if $\chi$ is stabilised by this projector, i.e. if P $|\chi\rangle = |$

$\chi\rangle$, then on all its non-vanishing components we get $(ij + ik + k) = 0 \bmod 2$, meaning that the phases in the equation above are all equal. Thus, if the input is from the subspace of interest, again we can retrieve the desired output by simply applying a Pauli correction, which now reads $Z^\beta \otimes Z^\alpha$ . In both cases, we deterministically apply G, under the assumption that $|\chi\rangle = |$ $\text{nohe}(\psi)\rangle$ for some $\psi \in H^{(2)}$.

General case:

For larger N, we note that the operation $U_{nohe}$ can be implemented by iterating the same isometry introduced above, eventually resulting in a larger isometry from log N qubits to N - 1 qubits. Since the basic building-block is the same, it can be inverted by iterating the inversion procedure outlined for N = 4. This is shown explicitly for N = 16 in Fig. 5c. The circuit therein can be understood by comparison with the circuit for realising $U_{nohe}$ in Fig. 4a: we invert it by applying the destructive protocol in Fig. 5b in place of the direct (non-Clifford) unitary inversion. Note that in the displayed circuit we first execute all the unitary gates, and then all the SQPMs. This is allowed since only Clifford operations are involved, implying that we do not need to physically implement the adaptive Pauli corrections - that is, the byproducts of the form $Z^\alpha \otimes Z^\beta$: instead, byproducts can be 'propagated' through the circuit up to the point of a SQPM, where they are accounted for by adequately interpreting the measurement outcomes.

This eliminates the need for mid-circuit adaptive gates, thereby separating the circuit in two parts, as highlighted in the figure: the first part $V_{nohe}$ contains the Clifford operations and Pauli measurements that are pre-determined; the second part contains adaptive single-qubit Pauli measurements (SQPMs) on the ancillas, where the measurement bases are chosen depending on previous measurement outcomes. Note that since the measurements outcomes are probabilistic, $V_{nohe}$ also has a classical output $s_0 \in \{0, 1\}^{N-\log N-1}$, which collects the outcomes; we indicate the executed operation by $V_{nohe}^{(s0)}$.

The SQPMs are performed according to a decision diagram; this is specified by a function $F_T(s_0, s_1, \dots)$ that is continuously updated by the measurement outcomes $(s_0, s_1, \dots)$. The procedure is completed via $O(\log N)$ rounds of measurements. We can summarise this as follows: given any arbitrary state $\psi \in U_{nohe}(H^{(\log N)})$, then there exists a sequence of adaptive SQPMs that implements the transformation

$$\mathcal{V}_{nohe}^{(s_0)} |\Psi\rangle \xrightarrow[\text{SQPMs}]{} \mathcal{U}_{nohe}^{-1} |\Psi\rangle$$

, upon the application of a final Pauli correction; moreover, the protocol is always completed in $O(\log N)$ measurement rounds.

Resource-state based implementation:

This same protocol for inverting $U_{nohe}$ can as well be executed with the aid of a resource-state of the form

$$\left| \Phi^{(2)} \right\rangle = \frac{1}{2^{N-1}} \sum_{Y, Z} (-)^{Y \cdot Z} \left| Y \right\rangle_{D'} \otimes \mathcal{V}_{nohe} \left| Z \right\rangle_{\mathcal{P} \cup \mathcal{F}}$$

, where the indexes run over $Y, Z \in \{0, 1\}^{N-1}$. Therein we omit the classical output in $V_{nohe}{}^{s0}$ and simply write $V_{nohe}$ because manifestly any $s_0$ is equally well-suited for the following. This state can thus be assembled by first preparing N - 1 Bell pairs, and then applying any $V_{nohe}{}^{s0}$ to one half; subsets of qubits are defined with the same convention of the section above. For the inversion, we employ the scheme displayed in Fig. 5d: we first teleport the input state in the resource state via Bell measurements between the input qubits and D' , collecting the measurement outcomes in a binary vector s-1; then, we perform SQPMs on P, for which we employ a modified decision function F'$_T$($s_{-1}$, $s_0$, ...) that also accounts for the outcomes of the Bell measurements. We discuss in detail how F'$_T$ is derived in the SM; here we mention that this type of protocol is allowed via SQPMs by the fact that $V_{nohe}$ is Clifford, implying that $\Phi^{(2)}$ is a stabiliser state. Particularly, this enables to account for the stochastic nature of the Bell measurements by propagating Pauli byproducts through the state, and thus realising a deterministic protocol.

**Simplified Clifford query protocol:**

The tools developed in the sections above are suffcient to design a query protocol, which only involves Clifford operations and SQPMs. While this is not the ultimate construction, it is pedagogically useful to first discuss this simplified implementation. For this, assume that both the RSs $\Phi^{(1)}$ and $\Phi^{(2)}$ have been prepared in advance, and are supported on qubits I U D and D'UPUF respectively. An arbitrary address state 3, $|\psi\rangle = \Sigma_x \psi_x |x\rangle |x\rangle$ is supported on the log N QPU register 4 qubits R. Thus, the initial state is $\psi \otimes \Phi^{(1)} \otimes \Phi^{(2)}$. To execute the query, we proceed in three steps as detailed below.

(i) We start with our GT-based sampling protocol; that is, we perform BMs between R and I, and collect the outcomes m. As we showed above, this directly results in the state $|NOHE_m(\psi)\rangle$ on D. At this stage, it is useful to write down the obtained probabilistic NOHE explicitly for an arbitrary address $\psi$:

$$\left| \mathrm{NOHE}_m(\psi) \right\rangle = \sum_x (-)^{a \cdot x} \psi_x \left| nohe(x \oplus b) \right\rangle \otimes \left[ \bigotimes_{\alpha = N-1}^{2(N-1)} \mathrm{H}^{\Delta_{\alpha, x \oplus b}} \left| 0 \right\rangle \right]$$

. As we already discussed, different samples are related by highly complex circuits (in terms of non-Cliffordness). This might suggest that outcomes m $\neq 0$ should be discarded for effciently proceeding with the query; this would be in line with many similar gate-sampling protocols, which are commonly based on post-selection. Indeed, what seems compromised here is the relation between the amplitudes $\psi_x$ and the computational basis states $|x\rangle$ - a discrepancy that, at this stage, cannot be eliminated via simple operations. However, in the following we argue that this is not the case, and that any NOHE generated in this way can be successfully employed for the query.

(ii) At this point, the state reads $\Phi^{(1)}{}_m(\psi) \otimes \Phi^{(2)}$; the first part is supported on the unmeasured qubits D, while the second, which has not been used yet, is still on D' U P U F. We now load the data by applying to D a modified version of the single qubit operation $W_D$ dependent on m:

$$\overline{\mathcal{W}_D(m)} = \left[ \bigotimes_{\alpha=0}^{N-2} \mathbb{1}_\alpha \right] \left[ \bigotimes_{\alpha=N-1}^{2(N-1)} \mathrm{Z}_\alpha^{D_{b \otimes \mu^{-1}(\alpha-N+1)}} \right]$$

, obtaining the state

$$\left| \Phi_m^{(1)}(\psi | \mathcal{M}) \right\rangle = \sum_x (-)^{a \cdot x} \psi_x \left| nohe(x \oplus b) \right\rangle \otimes \left[ \bigotimes_{\alpha=N-1}^{2(N-1)} \mathrm{H}^{\Delta_{\alpha, x|m}} \left| \Delta_{\alpha, x|m} D_x \right\rangle \right],$$

. To understand the effect of this operation, it is convenient to write down explicitly the state

$$\left|\Phi_{m}^{(1)}(\psi|\mathcal{M})\right\rangle = \sum_{\boldsymbol{x}}(-)^{\boldsymbol{a}\cdot\boldsymbol{x}}\psi_{\boldsymbol{x}}\,|nohe(\boldsymbol{x}\oplus\boldsymbol{b})\rangle \otimes \left[\bigotimes_{\alpha=N-1}^{2(N-1)} \mathrm{H}^{\Delta_{\alpha,\boldsymbol{x}|m}}|\Delta_{\alpha,\boldsymbol{x}|m}D_{\boldsymbol{x}}\rangle\right]$$ , where we used the compact nota-

tion $D_{\alpha|m} = D_{b\oplus\mu-1\,(\alpha-N+1)}$. The crucial aspect to be appreciated here is the following: note that the original amplitudes $\psi_x$ are related to the correct data-bits $D_x$. Conceptually, we have adapted the data loading to the sampled $NOHE_m \in \varepsilon$, in such a way to preserve the desired correspondence between amplitudes and data-bits.

(iii) At this point, the current quantum state has the form $\Phi^{(1)}_m(\psi|M) \otimes \Phi^{(2)}$. Crucially, it can be shown that for any memory M and any address $\psi$, one always has $\Phi^{(1)}_m(\psi|M) \in U_{nohe}(H^{(\log N+1)})$. Therefore, to complete the query we can leverage the methods of the section above to invert $U_{nohe}$ with the aid of $\Phi^{(2)}$. That is, we first implement BMs between D and D' , collecting the outcomes $s_{-1}$, and then we proceed with a pattern of SQPMs on P according to the decision function $F'_T$. Upon the final application of Pauli corrections, this results in the state

$$\mathcal{U}_{nohe}^{-1}\left|\Phi^{(1)}(\psi|\mathcal{M})\right\rangle = \sum_{\boldsymbol{x}}\psi_{\boldsymbol{x}}\,|\boldsymbol{x}\rangle \otimes \left[\mathrm{H}\,|D_{\boldsymbol{x}}\rangle\right];$$

thus, we can finally apply a Hadamard gate on the bus qubit to retrieve the desired output $\psi_M$.

The fundamental feature of the presented query protocol is that, given the RS $\Phi^{(1)}\otimes\Phi^{(2)}$, it only involves Clifford online operations. In the next sections, we show that the same can be achieved with a unified RS $\Phi$ 1, which allows an important saving of resources.

## Resource-state definition:

We now give an exemplary defintion of the resource-state 1, $\Phi$, which is the major protagonist of the inventive qRAM design. For this, we start with a formal constructive definition; we outline protocols for physically preparing $\Phi$ in subsequent sections. Formally, $\Phi$ can be specified by the circuit in Fig. 6: there, we prepare the resource-states $\Phi^{(1)}$ and $\Phi^{(2)}$ and perform (partial) Bell measurements; indeed, note that not all the Bell measurements are completed. Specifically, we only measure the first N -1 qubits of D. After this, we finally apply a Pauli correction to PUF, conditioned on the measurement outcomes. Despite the Bell measurements rendering the circuit stochastic, in the following section we show that this protocol becomes deterministic with a suitable choice of the latter Pauli correction; for now, we can formally define $\Phi$ as the output of this circuit when all measurement outcomes are +1, and no correction is applied. Thus, we can write it as |

$\Phi\rangle = \mathcal{P}\,|\Phi^{(1)}\rangle \otimes |\Phi^{(2)}\rangle$, where we defined the contraction $\mathcal{P} : \mathcal{H}^{(3N-2)} \to \mathcal{H}^{(N)}$ as the linear map

$\mathcal{P} = \sum_{\boldsymbol{x}}\sum_{\boldsymbol{j},\boldsymbol{k}}(-)^{\boldsymbol{j}\cdot\boldsymbol{k}}D(\boldsymbol{x},\boldsymbol{j})\,|\boldsymbol{x}\rangle_{\mathcal{L}}\,\langle\boldsymbol{j}|_{\mathcal{D}}\,\langle\boldsymbol{k}|_{\mathcal{D}'}$ . Therein, $x \in \{0, 1\}^N$ indexes the computational basis on L, while j, k $\in \{0,$

$1\}^{2N-1}$ label the computational basis on D and D' respectively; moreover, the term $D(\mathrm{x}, \mathrm{j}) \equiv \prod_{\alpha=0}^{N-1}\delta_{x_\alpha,j_{N-1+\alpha}}$ forces a correspondence between x and the last N components of j. When we execute the query, $\Phi$ is already prepared; it has support on a set of resource qubits A, e.g. of dimension |A| = 5N - 3, and belongs to the Hilbert space $\mathcal{H}_{\mathcal{A}} \cong \mathbb{C}^{2^{|A|}}$.

The construction in Fig. 6 naturally suggests to partition A in disjoint subsets as $A = I \cup L \cup P \cup F$, of sizes $|I| = \log N$, $|L| = N$, $|P| = 2(2N - \log N - 2)$ and $|F| = \log N + 1$; the Hilbert space of these physical qubits is thus partitioned as $\mathcal{H}_{\mathcal{A}} = \mathcal{H}_{\mathcal{I}} \otimes \mathcal{H}_{\mathcal{L}} \otimes \mathcal{H}_{\mathcal{P}} \otimes \mathcal{H}_{\mathcal{F}}$. We will refer to this as the 'physical' Hilbert space, as it describes the quantum state of the resource qubits A, which are physically present on hardware during the query. Formally, $\Phi$ can be written in the computational basis as $|\Phi\rangle = \Sigma_{i_0,\dots,i_Q}\,\Phi_{i_0,\dots,i_Q}\,|i_0,\dots,i_Q\rangle$, where $Q \equiv |A| - 1$ and we set the tensor entries as

$\Phi_{i_0,\dots,i_Q} = \sum_{\boldsymbol{j},\boldsymbol{k}}(-)^{\boldsymbol{j}\cdot\boldsymbol{k}}D(\boldsymbol{x},\boldsymbol{j})\Phi^{(1)}_{i_0,\dots,i_M;\boldsymbol{j}}\,\Phi^{(2)}_{\boldsymbol{k};i_{M+N+1},\dots,i_Q}$ log N - 1 and we identify $x \equiv (i_{M+1}, \dots, i_{M+N})$. In the following, it will be useful to associate the contracted mute indexes (j, k) with virtual degrees of freedom; these belong to the virtual Hilbert space $H_D \otimes H_{D'}$, which is not associated to physical qubits. The interplay between the physical picture and the virtual one is then mediated by the map $P : H_D \otimes H_{D'} \to H_L$, which formally implemens the contraction; many of the operations executed during the query will be most easily understood in the virtual picture.

Deterministic resource-state preparation:

The presented formal definition of $\Phi$ is apparently non-deterministic, due to the presence of Bell measurements; indeed, as to now we defined $\Phi$ as the resulting state, post-selected on all the measurement outcomes being +1. In contrast, we now argue that any outcome is equally favorable, as we can cope with it by simply adding an adaptive Pauli correction to the end of the circuit; thus, no post-selection is needed, and the circuit can be regarded as deterministic. Ultimately, this is allowed by the fact that one of the two states we are 'merging', namely $\Phi^{(2)}$, is a stabiliser state; thus, by implementing standard propagation of Pauli operators we eventually end up with a simple Pauli byproduct. Here we sketch this as follows. To start, let us consider generic outcomes in the X measurements composing the Bell measurements. We collect the outcomes on D' with the binary vector b $\in \{0, 1\}^{2N-1}$; for D, recall that we only measure the first N - 1 qubits: for simplicity, we collect the outcomes as a $\in \{0, 1\}^{2N-1}$, where we set by default $a_\alpha = 0$ for $\alpha \geq$ N - 1. The effect of these generic outcomes is to substitute the map P with the generalised version

$$\mathscr{P}_{a,b} = \sum_{x} \sum_{j,k} (-)^{j \cdot k + a \cdot j + b \cdot k} |x\rangle_{\mathcal{L}} \langle j|_{\mathcal{D}} \langle k|_{\mathcal{D}'}.$$

Crucially, applying $P_{a,b}$ is equivalent to applying P, after having previously applied a Pauli operator; this can be seen from the equality

$$\mathscr{P}_{a,b} = \mathscr{P}\left[X^{\otimes a} Z^{\otimes b}\right]_{\mathcal{D}'},$$

where we set e.g. $X^{\otimes a} \equiv \bigotimes_{\alpha} X_\alpha^{a_\alpha}$ the relevant fact that the Pauli correction only acts on D', and not on D. Thus, the resulting state takes the form

$$|\Phi_{a,b}\rangle = \mathscr{P}|\Phi^{(1)}\rangle \otimes \left|\Phi_{a,b}^{(2)}\right\rangle,$$

where we set $\left|\Phi_{a,b}^{(2)}\right\rangle \equiv X^{\otimes a} Z^{\otimes b} |\Phi^{(2)}\rangle$. Therefore, the effects of measuring (a, b)$\neq$(0, 0) can be understood in terms of the properties of $\Phi^{(2)}$ only. Finally, to complete the proof we employ generic properties of (entangled) stabiliser states, which allow us to re-write the correction $X^{\otimes a} Z^{\otimes b}$ as a Pauli operator acting on P U F only. With this last step, we can to all effects account for the stochastic nature of the measurements by simply applying Pauli corrections to the unmeasured qubits P U F, thereby rendering the protocol deterministic.

**Query protocol: details**

We now present in detail the query protocol of the inventive qRAM design. As mentioned above, the proposed query proceeds in four steps, which can be put in correspondence with those highlighted in Fig. 4b. However, in our implementation these are executed with the aid of a resource state 1, $\Phi$ by employing the techniques introduced above. Another understanding of the query is that we implement a 'virtual' version of the simplified Clifford query described previously. At the formal level, we will make large use of the abstract map $\mathscr{P}$ to connect the physical operations to the virtual-space dynamics.

The steps can be understood as: (i) Sampling; (ii) Loading; (iii) Retrieving. The query begins as follows. The address-state 3 $|\psi\rangle = \Sigma_x \psi_x |x\rangle$ is initially supported on the e.g. log N qubits composing the QPU register 4, R; the resource-state 1, $\Phi$ is already assembled and stored on resource qubits A. For step (i), we start by sampling a virtual random NOHE of $\psi$ out of the ensemble $\varepsilon$. For this, we employ our sampling procedure by performing Bell measurements between R and I, collecting the outcomes m; this results in a state of the form

$$|\Phi_m(\psi)\rangle = \mathscr{P}\left|\Phi_m^{(1)}\right\rangle \otimes \left|\Phi^{(2)}\right\rangle,$$

where the virtual state

$$\Phi_m^{(1)}(\psi) \in \mathcal{H}_{\mathcal{D}}$$

is already defined above. Thus, in step (i) we applied a probabilistic NOHE (in virtual space) to the address 3, $\psi$, by sampling uniformly from $\varepsilon$. For step (ii), we now proceed by loading the data. This is achieved via a loading operation $\mathcal{W}_D$ ($m$), acting on L as follows:

$$\mathcal{W}_D(m) = \bigotimes_{\alpha=0}^{N-1} Z_{\mathcal{L}(\alpha)}^{D_{b \oplus \mu^{-1}(\alpha)}},$$

where we indicated by L($\alpha$) E L the qubits in L $\subset$ A; for the equation above, also note that $\mu^{-1}(\alpha)$ simply extracts the binary representation of an integer $\alpha$. By applying this, we obtain the state $|\Phi_m(\psi|M)\rangle = \mathcal{W}_D$ ($m$)$|\Phi_m(\psi)\rangle$, which has the form

$$|\Phi_m(\psi|\mathcal{M})\rangle = \mathscr{P}\left|\Phi_m^{(1)}(\psi|\mathcal{M})\right\rangle \otimes \left|\Phi^{(2)}\right\rangle;$$

For step (iii), we complete our protocol by inverting the NOHE. Importantly, we do not need to directly invert the specific NOHE$_m$ E $\varepsilon$ that we sampled during the first step: we simply need to invert the standard NOHE. To understand this, let us consider the state-vector

$$\Phi_m^{(1)}(\psi|\mathcal{M}) \in \mathscr{H}_{\mathcal{D}}$$

in virtual space, and suppose we applied the inverse of the NOHE operation to it; this would result in the state

$$\mathcal{U}_{nohe}^{-1}\left|\Phi_m^{(1)}(\psi|\mathcal{M})\right\rangle = \sum_{\boldsymbol{x}} (-)^{\boldsymbol{a}\cdot\boldsymbol{x}} \psi_{\boldsymbol{x}}\, |\boldsymbol{x} \oplus \boldsymbol{b}\rangle \otimes \left[\mathrm{H}\,|D_{\boldsymbol{x}}\rangle\right].$$

. Crucially, this is related to the desired state $|\psi_M\rangle = \Sigma_x \psi_x |x\rangle|D_x\rangle$ by application of a Hadamard to the last qubit, and the simple Pauli operation B$_m$ = X$^{\otimes b}$ Z$^{\otimes a}$ that we already introduced, meaning that $\psi_M$ can be retrieved straightforwardly. While the equation above is formally written in the virtual space $\mathscr{H}_{\mathcal{D}}$, now the key task is to achieve this in the physical space, by only employing single-qubit Pauli measurements (SQPMs) on the qubits in L $\cup$ P. We start by measuring all the qubits in L in the X basis, collecting the measurement outcomes M; crucially, the resulting conditional state can be written in the form

$$\mathbb{P}_{\mathcal{L}}^{(M)}|\Phi_m(\psi|\mathcal{M})\rangle = \mathcal{V}_{nohe}^{(M')}\left|\Phi_m^{(1)}(\psi|\mathcal{M})\right\rangle,$$

where M' is calculated as shown in the SM. This equation must be read as follows: the state $\Phi_m(\psi|M)$ has support on qubits L $\cup$ P $\cup$ F; the state $\Phi^{(1)}_m$ ($\psi|M$) belongs to the virtual space $\mathscr{H}_{\mathcal{D}}$; the operation V$_{nohe}$ acting on it executes a map from virtual to physical space of the form $\mathscr{H}_{\mathcal{D}} \rightarrow \mathscr{H}_{\mathcal{P} \cup \mathcal{F}}$. Further, we note that we always have $\Phi^{(1)}(\psi|\mathcal{M}) \in \mathcal{U}_{nohe}$ ( $\mathscr{H}^{(\log N)+1}$).

Thus, the same concept of

$$\mathcal{V}_{nohe}^{(s_0)}|\Psi\rangle \xrightarrow[\text{SQPMs}]{} \mathcal{U}_{nohe}^{-1}|\Psi\rangle.$$

holds here as well: we can design a sequence of SQPMs such that, upon the application of a final Pauli operation,

$$\mathbb{P}_{\mathcal{L}}^{(M)} |\Phi_m (\psi|\mathcal{M})\rangle \xrightarrow[\text{SQPMs}]{} \mathcal{U}_{nohe}^{-1} \left|\Phi_m^{(1)} (\psi|\mathcal{M})\right\rangle .$$

In practice, this realises the application of the inverse of the NOHE operation in physical space, as the right-hand side state in the equation above is supported on the physical qubits F. Thus, the right hand side can be transformed in the desired output state 8, $\psi_M$ by simply applying a Hadamard to the bus, and a suitable Pauli correction to the rest. Finally, in the last step (iv) we can collect the output state 8. To summarise, for the whole procedure presented so far we get the transformation

$$\mathbb{P}_{\mathcal{L}}^{(M)} \mathcal{W}_{\mathcal{M}}(m) \left[ \mathbb{P}_{\mathcal{R} \cup \mathcal{I}}^m CZ_{\mathcal{R} \cup \mathcal{I}} \right] \left[ \psi \otimes \Phi \right] \xrightarrow[\text{SQPM}]{} |\psi_{\mathcal{M}}\rangle ,$$

thus completing the query procedure.

Loading operation:

We finally discuss how the loading operation $\mathcal{W}_D$ (m) is executed. For this, it is useful to separate two possible scenarios: (a) the (classical) memory is stored on classical hardware; (b) it is stored on quantum hardware (i.e., on memory qubits). We note that for classical memories, one can straightforwardly switch from one scenario to the other, e.g. by measuring the memory qubits for swithching from (ii) to (a), or by applying classically-conditioned gates for the opposite switch. In general, scenario (a) might be experimentally preferable, as it saves qubit resources; however, scenario (b) could be advantageous for specific task, so we analyse the two independently.
For scenario (a), at an abstract level it is suffcient to proceed as follows. Given the measurement outcomes m, for each qubit L($\alpha$) E L $\subset$ A, we compute the string x = b$\oplus\mu^{-1}$ ($\alpha$) on classical hardware; then, we apply a Z gate to L($\alpha$) if $D_x$ = 1. Note that this can be executed in parallel on all qubits L($\alpha$), thus allowing for a O(1) implementation. Most importantly, for this we do not need the classical control software to 'lookup' the memory, i.e. to explicitly read all the values $D_x$. To understand this fact, we now present a detailed construction for the classical hardware implementing $W_M$(m). We model the controls on L as follows. To each L($\alpha$), we associate one 'control bit' $B_\alpha \in \{0, 1\}$, and one 'control device' $C_\alpha$ pointing at qubit L($\alpha$); when we $C_\alpha$ is triggered, it only looks up $B_\alpha$, and applies a Z gate to L($\alpha$) if $B_\alpha$ = 1.
We assume all the control devices can be triggered in parallel. In addition, the classical memory is coupled to a network of swaps, which are controlled by only log N external control bits $B_0$, $B_1 \ldots$, $B_{\log N-1}$; note that each $B_K$ controls N/2 swaps simultaneously. When the loading operation is called at step (ii) of the query, we have already registered on classical memory m = (a, b); we thus straightforwardly set $B_K$ = bn. After this is executed, the circuit of swaps is activated; This sets the control bits to exactly $B_\alpha = D_{b\oplus\mu-1(\alpha)}$. We now only need to trigger all the controls $C_\alpha$ in parallel, resulting in the implementation of the desired operation $W_M$(m). Thus, the desired loading is executed without any 'reading' of the memory by classical hardware. For scenario (b), the data bits $D_x$ are stored in the computational basis states $\{|0\rangle, |1\rangle\}$ of a set of memory qubits M(0), M(1), ..., M(N-1); specifically, qubit M($\alpha$) is set to the state $D_{\mu-1(\alpha)}$. Then, for implementing $W_M$(m), we need to execute a CZ gate between each pair of qubits M($\alpha$) and L(b $\oplus \mu^{-1}(\alpha)$) . For a processor featuring local connectivity, this requires to implement a circuit of swaps conditioned on the classical values b, similar to the classical circuit outlined above.

**Quantum error-corrected qRAM:**

A fundamental question, that has long concerned previous literature, is on whether QEC can be employed to scale-up a qRAM module to serve QPUs operating at relevant system sizes. Concerns are motivated by a series of facts. First, the number of ancillary qubits employed by (fast) qRAMs is exponential in the size of the QPU, suggesting that also the error-rate to be addressed via QEC scales as an exponential function of O(N); this would make the qRAM not error-correctable in the first place for any practical purpose. Second, the deep non-Cliffordness of $U_{nohe}$ E $C_{\log N}$ suggests that unbearable resources would be required for FT implementations of the query; specifically O(N) non-Clifford gates need to be applied. Indeed, previous studies have based estimates on the bare count of needed 'magic' states to be produced and injected in the computation during the query.

Built-in noise-resilience:

It was first suggested by Giovannetti, Maccone and Lloyd that circuit-level decopositions of the query might exist, where the relevant infidelity only scales as a function of polylogN. More precisely, the figure of merit we are interested in is the following: if a given qRAM protocol, provided the address $\psi$ as input, produces as output the density matrix $\rho_M$, then the query fidelity is defined as $F_{qRAM} = \langle \psi_{\mathcal{M}} | Tr_{rest}[ \rho_{\mathcal{M}} ] | \psi_{\mathcal{M}} \rangle$; therein, $Tr_{rest}$ traces out any ancillary qubits that should ideally be disentangled from the output. For generic qRAM protocols, this scales as $F_{qRAM} \sim \exp\{-polyN\}$, because errors occurring at any of the O(N) space-time events can have an important impact. The method introduced by Giovannetti and colleagues, dubbed as bucketbrigade, aimed at constraining the propagation of errors by reducing the amount of unnecessary entanglement produced during the procedure; after the enhanced performance of the bucket-brigade remained a conjecture for many years, recently Hann et al. were able to prove, both analytically and numerically, that indeed specific versions of the bucket-brigade have an error-rate bounded by $1 - F_{qRAM} \lesssim polylogN$. For this to be achieved, one must be careful in designing the query circuit, by making sure that only a polylogN number of error events can truly corrupt the query. This includes the adoption of specific designs for both the OHE encoding-decoding circuits, and of the loading step.

In the inventive scheme, the noise-resilience of the bucketbrigade method is built-in the whole qRAM procedure. This is achieved by the underlying structure of $U_{nohe}$, which sets the basis of the resource-state $\Phi$. Our circuit-level decomposition can indeed be understood as a modified version of the bucket-brigade, that preserves all its noise-resilience features identified in the dedicated literature. To certify this theoretical expectation, we simulate qRAM queries for memory sizes up to N = 1024, with random memories M (i.e., choosing randomly the databits $D_x$). Despite the dimension of the total Hilbert space apparently scaling as $2^{O(N)}$, the simulation is allowed by known techniques, which leverage the manifest non-universality of the gate set employed by qRAM. We consider two separate error models for our simulation. First, we simulate an always-on depolarising channel, for which we employ standard Monte Carlo methods: at each step, all qubits, both idle and operative, are affected by a random Pauli error. Second, we consider a model which is more suitable for neutral-atom platforms, where only qubits involved in gates are affected by Z errors; here, we only apply random Z gates on the currently-manipulated qubits. This is motivated by the fact that idle atoms in hyperfine states are not likely to undergo state-flips, and their coherence times are extremely long if compared to the gate-time. Moreover, errors are dominated by leakage out of the computational manifold, e.g. due to decays from Rydberg states during two-qubit gates; for scaling standard QEC, this requires to adopt erasure detection, with consequent conversion to Z errors. We note that these methods are now being successfully implemented in state-of-the-art experiments, and are likely to become a central component of FT computation with neutralatoms.

By further analysing our scheme, we theoretically expect an error scaling of the form $1 - F_{qRAM} \lesssim \epsilon \log^{\alpha} N$, with the coeffcient $\alpha$ depending on the error model. Therein, $\epsilon$ is the error-rate of a single physical qubit during a time-step. We estimate the coeffcients in the range $\alpha \lesssim 4$ for the first model with always-on depolarisation, and $\alpha \lesssim 2$ for the second model. Fig. 3f displays the obtained numerical results; while our theoretical estimates are only derived via qualitative methods, we find high agreement with the simulation, from which we extract the numerical values $\alpha \simeq 3.8$ and $\alpha \simeq 1.9$ for the two error models, respectively.

Fault-tolerant implementation:

We now discuss fault-tolerant implementations of the proposed qRAM, highlighting the key advancements of this work in terms of QEC. For this, we first recall that in a 'fault-tolerant quantum computation' (FTQC) the processor operates on logical qubits, and implements standard QEC between the logical gates. The necessary condition for QEC to be effective in these schemes is that during each logical operation errors on physical qubits never propagate inside the logical blocks (fault-tolerance condition); if this holds true for any logical operation, including syndrome-extraction and error-correction, then QEC can succeed in arbitrarily suppressing the logical error rate (if physical errors are beyond a 'circuit-level' threshold).

One central concept in FTQC is that of transveral gates: for instance, a logical single-qubit gate $U_L$ is transversal if it can be executed by applying one single-qubit gate to each physical qubit in a block; an analogous definition holds for two-qubit gates. It is manifest that transversal gates are intrinsically fault-tolerant; however, a well-known result is that no QEC code exists, with a universal set of transversal gates (Eastin-Knill theorem). It is a common fact for typical QEC codes, that gates from the Clifford group are transversal: for instance, this is true for Calderbank-Shor-Steane (CSS) codes, for color codes, and for the famous toric and surface codes. This illustrates well the fact that (for standard QEC schemes) Clifford gates are commonly much simpler, and less resource-consuming, than non-Clifford gates; the latter ones, which cannot be implemented by transversal operations, require more demanding techniques, e.g. 'magic-state injection' or 'code-switching'. The hardness of implementing non-Clifford gates with standard QEC has so far left fundamental concerns on the very possibility of error-correcting a query to the qRAM, since previous proposals needed O(N) such gates to be implemented online during the execution of the algorithm.

In the inventive qRAM design, there are two key aspects that allow for directly integrating QEC. First, as discussed in the previous section, the logical error rate scales as polylogN, implying that QEC is possible to begin with. Second, the proposed query procedure can be entirely Clifford: thus, with standard QEC codes any operation within the query can be implemented by transversal gates only. Specifically, we note that for the query to be entirely transversal, it is suffcient that the following operations are transversal for the specific code considered: Pauli gates and measurements, and (at least) one between the controlled-not and the controlled-phase gates. Indeed, the needed Bell measurements can be equally well be implemented via any of these two-qubit gates. In the following, we assume these generally-true conditions on transversal operations to hold, and we analyze the various steps and aspects of our qRAM design one-by-one in the spirit of FTQC.

Resource-state preparation:

Preparing the RS $\Phi$ is the most demanding part of our qRAM design, both with and without QEC. Indeed, we stress that any remarkable complexity associated with qRAM, in this work is entirely outsourced to this step. As discussed, our approach has two main advantages. The first is that any demanding operation does not directly impact the online query: once the main algorithm is running, any highly complex protocol is already executed, and the query is fast and simple. Thus, for many purposes the complexity associated with the preparation of $\Phi$ should not be included in the online cost-evaluation of the algorithm; rather, $\Phi$ can be interpreted as a resource furnished by the processor. Second, we no longer need to apply the unitary $U_{nohe}$ to an arbitrary input state: rather, we need to prepare a specific, known state, which has no connection with any detail of the algorithm nor the memory. This is generally a much simpler task: for instance, one can employ post-selected methods, as nothing is lost if the preparation fails. At the technical level, the cost of the preparation of $\Phi$ can be evaluated in several ways. For instance, the number of Toffoli gates employed in the circuit-level decomposition of Fig. 6 is 2N - log N - 2. We note that since the only non-Clifford gate which is needed is the Toffoli gate, a sound strategy is to directly distill ad-hoc RSs, resulting in a minimal number of MSFs. Alternatively, one can employ more MSFs for distilling simpler T states. In this regard, several decompositions of the Toffoli are possible. Since the preparation of $\Phi$ does not impact the runtime of the principal algorithm, it is convenient to sacrifice circuit-depth for lowering the number of needed MSFs; under this perspective, typical decompositions of the Toffoli gate in four T gates are optimal. In addition, we remark that the last N Toffoli gates can actually be substituted by controlled-Hadamard gates, which only require two T gates; thus, in terms of T count our preparation procedure can be implemented with 6N - log N - 2 magic states of the T type.

Resource-state storage:

After the RS is prepared, it is stored statically, and does not need to be manipulated until the query begins. At this stage, the qubits only need to be corrected at the memory-level, where thresholds are much higher. In addition, as shown in the section above, the proposed qRAM can tolerate several errors in the RS; consequently, syndrome extraction can be performed at low rates. In addition, the Clifford query comes with another crucial advantage: detected errors do not need to be corrected before starting the query. Instead, one can simply calculate the propagation of detected errors through the query, and only correct them at the end of it on the final log N + 1 qubits. Eventually, this means that only very limited resources are required for storing the RS, and no heavy parallel classical processing is needed for fast decoding of the syndrome.

Query implementation:

For implementing the query, we only need transversal operations, which include a first layer of parallel Bell measurements on log N pairs of logical qubits, and O(log N) rounds of SQPMs on O(N) logical qubits. Since all these operations are transversal, there is no T cost associated with the query, and no MSF is needed. In addition, we remark the following important fact. Throughout common FTQCs, one needs to continuously extract the syndrome, which allows to identify the location of errors and consequently correct them. Typically, this is achieved by implementing repeated stabiliser measurements: these consist of the measurement of particular correlations between Pauli operators, that do not project the logical state, but allow to detect deviations from the logical space. For measuring the stabilisers fault-tolerantly, one usually needs to employ resource-consuming protocols, with the introduction of a large number of ancillary qubits and many rounds of 'ancilla-state verification'; in addition, commonly the whole stabiliser measurement needs to be repeated several times, in order to mitigate measurement errors. Importantly, none of these techniques are necessary during our query scheme. This is because almost the whole procedure only contains projective measurements of the logical qubits in the Pauli basis. Since Pauli operators are transversal, these projections can be executed by simply measuring all the physical qubits in a block, and is automatically fault-tolerant; indeed, the obtained outcomes then not only contain the result of the desired logical measurement, but also the needed syndrome information. Furthermore, the only operation which does not consist of a trivial SQPM is the initial GT, which also requires to apply entangling gates for executing the Bell measurements. However, again we do not need midcircuit syndrome extraction: as was shown by Knill in its seminal work, by executing the GT we also directly get the syndrome. In summary, the Clifford and intrinsically measurement-based character of the query allows us to execute it fault-tolerantly with transversal operations only, without injecting magic states, and without the need of mid-circuit stabiliser measurements and physical error-correction.

Resource estimations:

We now estimate the resources needed for fault-tolerant implementations of the proposed qRAM module. To this end, we consider for simplicity a concatenated code (e.g., a conventional CSS code such as the Steane code) with threshold $\epsilon_{th}$. Moreover, we assume that physical components fail with a raw rate $\epsilon$. As a figure of merit, suppose we target a final qRAM fidelity $F_{qRAM}$ above 1 - $\epsilon_*$, i.e. we require the logical error-ceoorected infidelity to be bounded by $1 - F_{qRAM} \leq \epsilon_*$;

then, we show that the number of needed code concatenations scales as $c \simeq \log\left[\log\left(\frac{\epsilon_{th}}{\epsilon^*}\log^\alpha N\right)\Big/\log\left(\frac{\epsilon_{th}}{\epsilon}\right)\right]$,

where $\alpha$ is the exponent introduced above, dependent on the specific error model. In summary, the number of physical qubits needed for representing a logical qubit in this simplified scenario scales as log (log N). We remark that the second logarithm herein originates directly from the built-in noise-resilience of our protocol: if different query sub-structures are employed, the physical resources needed for one single logical qubit are exponentially more, scaling as log polyN.

**Neutral atom blueprint:**

We now outline a detailed exemplary qRAM blueprint based on the concepts above, which is specifically designed for state-of-the-art neutral-atom processors. In the following, we only employ techniques that have already been demonstrated in large-scale QC experiments with these platforms. While our design is well-suited for many other technologies, including trapped-ions, photonic chips and superconducting devices, specific properties of neutral-atom processors make them a natural choice for the following proposal.

Processor overview:

Neutral-atoms have emerged as a leading platform for QC in very recent years, due to a series of breakthrough experiments that facilitated an extremely rapid system-size scaling and technological development. In the following, we refer to reconfigurable processors: here the physical qubits are single atoms trapped in optical tweezers, which allow high flexibility of the system layout. Indeed, while high-fidelity gates are realised via Rydberg interactions at typical distances of few $\mu$m, the tweezers can be employed to shuttle the atoms across regions spanning hundreds of $\mu$m, while maintaining the internal coherence of the qubits. Together with arbitrary single-qubit manipulations and mid-circuit readout, this completes the picture of a promising and unique QC platform.

In the last years, high two-qubit gate fidelities in the 99.5% range, and easily accessible system-sizes of thousands of atoms, have stimulated impressive experimental demonstrations, including investigations of logical QC with QEC successfully implemented. Neutral atoms are thus a natural choice for near-term realizations of the proposed qRAM module, both for the flexibility of the platform, and for the possibility of implementing errorcorrection.

Neutral-atom qRAM scheme:

A realization of our qRAM module with neutral atoms can be blueprinted as sketched in Fig. 1e. In the following we directly assume a fault-tolerant, error-corrected implementation, but thanks to the demonstrated built-in noise resilience, the underlying logical structure can as well be implemented at the physical level for small memories. The resource qubits A supporting the RS $\Phi$ are stored statically in SLM tweezer-traps, realising a 'qRAM storage zone'. Between queries, standard QEC is performed to detect and correct errors on $\Phi$ due to decoherence; this only requires 'memory-level QEC', and thus features much higher thresholds than FTQC. Given the very high coherence times of qubits encoded in hyperfine levels, and the noise-resilience of the whole qRAM design, error detection can be performed at low rates in this setting (recall that error correction is not needed). When the query starts, we only need to interface the log N logical qubits in $I \subset A$ with the log N address QPU qubits; for this, we can employ coherent atom transport, or leverage pre-distilled Bell pairs for entanglement swapping, and perform Bell measurements. As discussed in the section above, this directly provides all the needed syndrome information to correct errors during the gates or the transport (via 'Knill QEC'); remarkably, this also allows to detect loss errors during the transport as erasures. The rest of the query protocol can be implemented by means of local, highly parallelized operations only on the remaining physical qubits in A, and thus can be implemented entirely in the qRAM storage zone. Specifically, we can use developed techniques for single-qubit gates and measurements such as SLM-induced light shifts. For the measurements, (at least) two approaches are possible: (i) as shown in recent experiments with alkaline-earth atoms, specific atomic structures can be leveraged to implement single-qubit non-destructive measurements; (ii) otherwise, coherent transport to a 'readout zone' can be used for collective, destructive readout of subsets of qubits, as was implemented in large-scale QC demonstrations with alkali atoms. Finally, we need to extract the remained $\log N + 1$ qubits in $F \subset A$, and feed them back to the QPU; for this, again we can use coherent transport, or pre-assembled Bell pairs. We note that the latter operation can also be performed at any time in advance to the start of the query, or in parallel with any previous step. This completes an end-to-end query. The second central part of our qRAM design is the preparation of $\Phi$, which is carried out independently in the qRAM zone. For implementing $U_{nohe}$ in the circuit decomposition of Fig. 4b, the major challenge is the nonlocal connectivity. This is a crucial aspect: on a locally-connected processor, it cannot be coped with effciently, as any method (including chains of swaps or teleportation) would jeopardize the fundamental error-resilience of the query. With neutral atom processors, we leverage coherent atom transport in order to artificially build the needed connectivity while preserving the error-resilience; however, at the hardware level there are several stringent requirements, for this to be achieved effciently. Below we first outline a generic scheme for preparing $\Phi$ starting from a series of Bell pairs; then we present an end-to-end rearrangement protocol, whose output is the desired distribution of Bell pairs, positioned in space so to effectively reproduce the needed connectivity.

Preparation scheme:

Any quantum circuit U can be implemented via local operations on a set of suitably distributed Bell pairs (Bellpair distribution, BPD), where the spatial distribution of the pairs depends on U; this is achieved by simply employing standard teleportation to shuttle the logical information, and interfacing qubits locally. We now first focus on this paradigm for preparing $\Phi$, and then elaborate on the preparation of the BPD in the paragraph below. This can be understood in two parts: first, we prepare $\Phi^{(1)}$ and $\Phi^{(2)}$; second, we implement P via partial BMs to assemble $\Phi$. Importantly, the BPD for $\Phi^{(1)}$ and $\Phi^{(2)}$ is the same, allowing for effcient preparation. The needed BPD can be understood in terms of a 'nested one-hot encoding bifurcation graph' (NOHEBG), which is displayed in Fig. 7a. Therein, as shown in the insets, triangles represent 'stations' where qubits are stored; links represent the presence of a Bell pair shared between the triangles. For preparing $\Phi^{(1)}$ and $\Phi^{(2)}$, we simply need to iterate the application of the three-qubit gadgets displayed in Figs. 4d and 5b respectively; correspondingly, each station contains six qubits (three to support the teleported-in input, and three to teleport-out the output). Once the BPD is is prepared according to the NOHEBG, preparing $\Phi$ is straightforward; remarkably, while $\Phi^{(1)}$ needs $O(\log N)$ steps to be prepared, instead $\Phi^{(2)}$, thanks to its stabiliserness, is prepared with a single layer of completely parallel operations. The only nontrivial part that remains to be discussed is the preparation of the BPD, which we outline below.

Rearrangement subroutine:

As an underlying exemplary structure, we consider $8 (2N - \log N - 2)$ static traps generated by a spatiallight modulator (SLM), spatially arranged as shown in Fig. 7b. Specifically, we employ a hierarchy of two groupings: First, we divide the traps in $\log N$ main sectors, labeled by $K = 0, 1, ..., \log N - 1$; each sector K is further divided in $K + 1$ columns, labeled by $C = 0, 1, ... , K$; moreover, column C in sector K is divided in 2C stations, labeled by $S = 0, 1, ..., 2C - 1$.

For each station, we consider 8 traps, which are arranged in a $3 \times 3$ checkerboard (with a defect in the right-bottom spot); we can thus label the traps within a station by two integers $(x, y)$, so that the right-bottom defect spot is $(1, 3)$. Together, the five labels $(K, C, S, x, y)$ identify unambiguously one static trap. If we impose integer cartesian coordinates $(X, Y)$ on the 2D plane, these are related with the adopted labeling as $X = x + 3C + 3K(K + 1)/2$ and $Y = y + 3S$. To start, we position $5 (2N - \log N - 2)$ qubits in the traps, such that 5 traps are occupied per station; precisely, we leave empty the leftmost column of each station, i.e. the traps $(3, y)$. In each station, the qubits are initialised in the following configuration: the one in trap $(2, 3)$ is simply in the $|0\rangle$ state, while the others are divided in two entangled pairs of the form $\Sigma_{ij}(-)^{ij}|i,j\rangle$, which is a two-qubit cluster state; for common language, we will refer to the involved qubits as 'Bell pairs', as they are locally equivalent. The pairs are such that $(1, 1)$ and $(1, 2)$ are entangled with $(2, 1)$ and $(2, 2)$ respectively; thus, the 'entanglement bonds' are horizontal as shown in Fig. 7c. These pairs are prepared simultaneously in $O(1)$ time by first initializing the involved qubits in the $|+\rangle$ state, and then moving them to the entangling zone to apply a CZ gate. After this, we proceed with three subsequent layers of rearrangements. The goal of this rearrangement is to spread the Bell pairs among the stations in such a way to establish an effective connectivity, which will be a resource for quantum teleportation.

The first layer of rearrangements couples stations within the same sector as shown in Fig. 7d; this is also shown in Fig. 7b. Specifically, for each station (except the rightmost ones of each sector) we pick with the acousto-optical deflector (AOD) beams the qubit in trap $(1, 2)$, and we move it to a trap of a different station of the neighboring column. Precisely, depending on the starting basis, the arrival trap is either $(1, 2)$ or $(1, 3)$; we can write this rearrangement as $(K, C, S, 1, 2) \longrightarrow \left(K, C - 1, \left\lfloor \frac{S+1}{2} \right\rfloor, 3, 2 + \lfloor S/2 \rfloor\right)$ for $C > 0$ and $K > 0$. Crucially, note that across the whole construction (i.e., even considering all the sectors together), moved qubits starting with the same vertical coordinate end up with the same vertical coordinate, as well as qubits starting with the same horizontal coordinate end up with the same horizontal coordinate; thus, we can perform this rearrangement with a single AOD step. The second layer or rearrangements couples neighboring sectors as shown in Fig. 7e, or as also highlighted in Fig. 7b. Specifically, for all the stations in sector K (except those in the leftmost column), we pick the qubit in trap (1, 1), and we move it to trap (3, 1) of a corresponding station in the neighboring sector SK-1. Thus, the rearrangement reads (K, C, S, 1, 1)-→ (K - 1, C, S, 3, 1) for C < K and K > 0. Again, a crucial feature is that moved qubits starting with the same vertical (horizontal) coordinate end up with the same vertical (horizontal) coordinate; thus, again we can execute this with a single AOD step. The last layer of rearrangements couples the leftmost columns of each sector. Specifically, for each station in the leftmost column of sector K we pick the qubit in trap (1, 3), and we move it to a station in the leftmost column of sector K - 1, as shown in Fig. 7f, and highlighted in Fig. 7b; depending on the starting station, the arrival trap is either (3, 2) or (3, 3). Specifically, we perform the

rearrangement $(K, C, S, 1, 1) \longrightarrow \left( K - 1, C - 1, \left\lfloor \frac{S+1}{2} \right\rfloor, 3, 2 + \lfloor S/2 \rfloor \right)$ for K > 0. Also in this third case, again motions are uniform in the vertical (horizontal) coordinates, such that this final layer of rearrangements can be executed in a single AOD step as well.

## Summary:

Here, a novel method of quantum-accessing a memory 2 using a quantum address 3 and a qRAM system is shown which is readily integrable in present large-scale processors, allows for fast and robust quantum queries, and can be naturally combined with QEC. The key aspect is the separation of the qRAM subroutine in two parts. The first involves the preparation of a resource-state 1, (RS) Φ, which is independent on both the memory 2 and the target task, and can be assembled effciently in advance; it can be understood as a resource 'fueling' the qRAM. The second part implements the query by 'consuming' the resource state 1, Φ via entangling quantum gates 5 and conditional quantum gates 7, preferably all Clifford operations, and measurements, preferably single-qubit Pauli measurements (SQPM). This is inspired by the gate teleportation paradigm (GT), which plays a foundational role in QEC: complex operations are outsourced to the offline preparation of RSs, only leaving simple tasks for the online computation. However, typically GT is only effcient for minimally non-Clifford tasks, like T-gate injection; in contrast, here we employ GT to effciently implement highly non-Clifford subroutines. In addition, the inventive method is intrinsically error-resilient, with faults automatically suppressed by built-in mechanisms; this results in an exponentially-enhanced query fidelity, eventually opening the door to near-term implementations with and without QEC. Exemplary blueprints for reconfigurable neutral-atom processors are shown, only relying on technology that has been successfully implemented in large-scale experiments.

## Claims

1. A method of quantum-accessing a memory (2) using a quantum address (3) by operating a quantum computing module (1') and a quantum processing unit (4), wherein the quantum computing module (1') comprises a plurality of resource qubits initialized in a resource state (1), wherein the quantum processing unit (4) supports a quantum address (3) comprising a plurality of address qubits, wherein the method comprises the steps:

   i. entangling a first subset of the resource qubits of the resource state (1) with the quantum address (3) by applying a single layer of entangling quantum gates (5) onto the first subset of the resource qubits and the address qubits, subsequently performing a single layer of measurements (6) on the entangled first subset of resource qubits and address qubits and collecting the measurement outcomes (m),
   ii. correlating a second subset of resource qubits of the resource state (1) with the memory (2) by applying a single layer of conditional quantum gates (7) depending on the measurement outcomes (m) from step i. and on the values stored in the memory (2) onto the second subset of resource qubits and subsequently performing a single layer of measurements (6) on the correlated second subset of resource qubits,
   iii. performing a logarithmic number of layers of measurements (6) on a third subset of the resource qubits of the resource state (1),
   iv. collecting the output state (8) on the unmeasured qubits of the resource state (1).

2. A method according to claim 1, wherein the entangling quantum gates (5) comprise Clifford controlled-phase gates.

3. A method according to any of the preceding claims, wherein all measurements (6) of resource and address qubits are single-qubit Pauli measurements.

4. A method according to any of the preceding claims, wherein all quantum gates (5, 7) are Clifford gates (10).

5. A method according to any of the preceding claims, wherein the first subset of the resource qubits of the resource state (1) is entangled with the quantum address (3) via a unit depth Clifford circuit.

6. A method according to any of the preceding claims, wherein the quantum address (3) comprises a bus qubit initialized in a bus state, preferably in the $|+\rangle$ state.

7. A method according to any of the preceding claims, wherein the initialization of the resource state (1) comprises applying non-Clifford gates onto the plurality of resource qubits, wherein the number of non-Clifford gates is of order N, wherein N is the number of bits or qubits of the memory (2).

8. A method according to any of the preceding claims, wherein the memory (2) is a classical memory comprising a plurality of bits or a quantum memory comprising a plurality of qubits.

9. A method according to any of the preceding claims, wherein the resource state (1) comprises order N resource qubits and is initialized in the quantum computing module via the following steps:

   • preparing order log N Bell pairs via entangling quantum gates (5),
   • implementing a nested one-hot encoding (9) on one half of the Bell pairs via applying order N non-Clifford gates on some resource qubits,
   • applying Clifford gates (10) on order N of the resource qubits in the nested one-hot encoding and the remaining resource qubits not acted on yet.

10. A quantum random access memory (qRAM) system comprising

   • a memory (2),
   • a quantum computing module (1') comprising a plurality of resource qubits initialized in a resource state (1),
   • a quantum processing unit (4) supporting a quantum address (3) comprising a plurality of address qubits, wherein the quantum processing unit (4) is configured to apply entangling quantum gates (5) and measurements (6) onto the resource qubits and the address qubits, wherein the quantum processing unit (4) is configured to correlate the memory (2) with the resource qubits of the resource state (1) by applying conditional quantum gates (7) onto the resource qubits,
   wherein the qRAM system is configured to output an output state (8) corresponding to the state of the quantum address (3) coherently entangled with the memory (2).

11. A qRAM system according to claim 10, wherein the quantum computing module (1') and the quantum processing unit (4) comprise neutral atom arrays.

12. A qRAM system according to claim 10 or claim 11, wherein the resource state (1) comprises order N resource qubits, wherein N is the number of bits or qubits stored by the memory (2).

13. A qRAM system according to claim 12, wherein the quantum computing module (1') is configured to initialize the resource state (1) by

   • preparing order log N Bell pairs via entangling quantum gates (5),
   • implementing a nested one-hot encoding (9) on one half of the Bell pairs via applying order N non-Clifford gates on some resource qubits,
   • applying Clifford gates (10) on order N of the resource qubits in the nested one-hot encoding and the remaining resource qubits not acted on yet.

14. A qRAM system according to any of the claims 10 to 13, wherein the quantum computing module (1') is configured to initialize the resource state (1) via a quantum circuit comprising order log(N) steps, wherein N is the number of bits or qubits of the memory (2).

Fig. 1a

Fig. 1b

Fig. 1c

Fig. 2a

Fig. 2b

Fig. 2c

$\Phi \otimes \psi$

$\Phi_{\mathbf{m}}(\psi)$

$\psi$

$\mathbf{m}$

$f$

EP 4 779 531 A1

Fig. 3a

Fig. 3b

Fig. 3c

Fig. 3d

Fig. 3e

Fig. 3f

Fig. 4a

$|\psi\rangle$

$|0\rangle$ $|0\rangle|0\rangle|0\rangle|+\rangle|0\rangle|0\rangle|0\rangle|0\rangle|0\rangle$

$|nohe(\psi)\rangle$

$|\text{NOHE}(\psi)\rangle$

Fig. 4b

$|\psi\rangle|+\rangle$

$\mathcal{U}_{nohe}$

$\mathcal{U}_{nohe}^{-1}$

$|\psi_{\mathcal{M}}\rangle$

Fig. 4c

$|\psi\rangle$

$|+\rangle|0\rangle$

$|0\rangle$

$|\psi_{\mathcal{M}}\rangle$

Fig. 4d

$|i,j\rangle|0\rangle$

$|nohe(i,j)\rangle$

Fig. 4e    Gate teleportation

RS preparation

$|+\rangle|+\rangle|+\rangle$    $|+\rangle|+\rangle|+\rangle$

$\mathcal{U}$

$\Phi_{\mathcal{U}}$

$|\psi\rangle$

BMs

$\mathcal{U}B|\psi\rangle$

$\mathcal{U}B\mathcal{U}^{\dagger}$

Feedforward

$\mathcal{U}|\psi\rangle$

Fig. 4f

|  |  | NOHE($x$) | |
| --- | --- | --- | --- |
|  | $ohe(x)$ | $nohe(x)$ | OHE($x$) |
| $x = (0,1,1)$ | ○○○○○○●○ | ○●○○●○○ | ○○○○○○●○ |
| $x = (1,1,0)$ | ○○○●○○○○ | ●○●○○○ | ○○○●○○○ |
| $x = (1,0,1)$ | ○○○○○●○○ | ●○○●○○ | ○○○○○○●○ |

Fig. 5a  Resource-state $\Phi^{(1)}$ preparation

Fig. 5b

$|\psi\rangle$

Sampling $m$

$|\text{NOHE}_m(\psi)\rangle$

$|nohe(i,j)\rangle$

$|i,j\rangle$

Fig. 5c

$|nohe(\psi)\rangle$

Clifford circuit $\mathcal{V}_{nohe}$

$F_T(s_0, s_1, \ldots)$

Pauli corrections

$|\psi\rangle$

Single-qubit Pauli measurements

Fig. 5d

Fig. 6

Fig. 7a

Fig. 7b

Fig. 7c

Fig. 7d

Fig. 7e

Fig. 7f

Station

Sector

| | Europäisches Patentamt European Patent Office Office européen des brevets | **EUROPEAN SEARCH REPORT** | **Application Number** EP 25 15 2677 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JONATHAN ALLCOCK ET AL: "Constant-depth circuits for Uniformly Controlled Gates and Boolean functions with application to quantum memory circuits", ARXIV.ORG, CORNELL UNIVERSITY LIBRARY, 201 OLIN LIBRARY CORNELL UNIVERSITY ITHACA, NY 14853, 14 December 2023 (2023-12-14), XP091667785, | 10-12,14 | INV. G06N10/60 |
| A | * page 1 - page 43 * | 1-9,13 | |
| A | VITTORIO GIOVANNETTI ET AL: "Quantum Random Access Memory", PHYSICAL REVIEW LETTERS, vol. 100, no. 16, 21 April 2008 (2008-04-21), XP055628798, US ISSN: 0031-9007, DOI: 10.1103/PhysRevLett.100.160501 * page 1 - page 4, right-hand column, paragraph 1 * | 1-14 | |
| | | | **TECHNICAL FIELDS SEARCHED (IPC)** |
| A | Jaques Samuel ET AL: "QRAM: A Survey and Critique", arXiv.org, 17 May 2023 (2023-05-17), XP093290662, DOI: 10.48550/arXiv.2305.10310 Retrieved from the Internet: URL:https://arxiv.org/pdf/2305.10310 [retrieved on 2025-06-30] * page 1 - page 30, right-hand column, paragraph 1 * * Appendices A-C * | 1-14 | G06N |
| A | WO 2019/204678 A1 (GOOGLE LLC [US]) 24 October 2019 (2019-10-24) * the whole document * | 1-14 | |
| | -/-- | | |

The present search report has been drawn up for all claims

| Place of search | Date of completion of the search | Examiner |
|---|---|---|
| The Hague | 1 July 2025 | Volkmer, Markus |

EPO FORM 1503 03.82 (P04C01)

page 1 of 2

**EUROPEAN SEARCH REPORT**

Europäisches
Patentamt
European
Patent Office
Office européen
des brevets

Application Number

EP 25 15 2677

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | FRANCESCO CESA ET AL: "Fast and Error-Correctable Quantum RAM", ARXIV.ORG, CORNELL UNIVERSITY LIBRARY, 201 OLIN LIBRARY CORNELL UNIVERSITY ITHACA, NY 14853, 24 March 2025 (2025-03-24), XP091969934, * the whole document * ----- | | |

TECHNICAL FIELDS
SEARCHED      (IPC)

The present search report has been drawn up for all claims

| Place of search | Date of completion of the search | Examiner |
|---|---|---|
| The Hague | 1 July 2025 | Volkmer, Markus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 25 15 2677

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2025

| Patent document cited in search report | Publication date | Patent family member(s) | | Publication date |
|---|---|---|---|---|
| WO 2019204678 A1 | 24-10-2019 | CA | 3093713 A1 | 24-10-2019 |
| | | CN | 111902828 A | 06-11-2020 |
| | | CN | 119378700 A | 28-01-2025 |
| | | EP | 3782088 A1 | 24-02-2021 |
| | | US | 2021157781 A1 | 27-05-2021 |
| | | US | 2023394019 A1 | 07-12-2023 |
| | | US | 2025148331 A1 | 08-05-2025 |
| | | WO | 2019204678 A1 | 24-10-2019 |

EPO FORM P0459

For more details about this annex : see Official Journal of the European Patent Office, No. 12/82